# EUROPEAN PATENT APPLICATION

(11) **EP 4 450 354 A1**
(43) Date of publication of application: **23.10.2024**
(21) Application number: 22905556.1
(22) Date of filing: 19.12.2022
(51) Int. Cl.: B60W 60/00, B60W 10/00, B60W 40/13, G05D 1/02, G08G 1/00

(54) **INTELLIGENT SYSTEM AND CONFIGURATION SYSTEM FOR AUTONOMOUS TRANSPORT VEHICLE, ROAD TRAILER AND METHOD FOR IDENTIFYING A TRANSPORT VEHICLE**

(30) Priority: 17.12.2021 BR 102021025678
(71) Applicant: Instituto Hercílio Randon, 95181899 Caixas do Sul (BR)
(72) Inventor: BOARETTO, Joel, 95020-472 Caxias do Sul/RS (BR); MOLON, Maicon, 95032-759 Caxias do Sul (BR); GARBOSSA PASTRE, Guilherme, 95084-430 Caxias do Sul (BR); RODRIGUES MAIA, Luciano, Caxias do Sul (BR); LEMUEL BISPO ZOTTIS, Jônatas, 95070-200 Caxias do Sul (BR)
(74) Representative: Grünecker Patent- und Rechtsanwälte PartG mbB
(86) International application number: PCT/BR2022/050510
(87) International publication number: WO 2023/108249

(57) **Abstract**

The present invention describes a system for an autonomous cargo transport vehicle aiming to provide safety and reliability of autonomous vehicles, regardless of the level of automation and the route or trajectory. Specifically, the present invention comprises a smart system that identifies a road implement for an autonomous tractor vehicle by means of static data from the road implement linked to a target, with a system processor executing control configurations based on the static data. Thus, based on the identification and execution of control configurations, the present invention allows the coupling of the autonomous tractor vehicle to the road implement, transportation of the road implement from one point to another under different levels of automation, so that the processor performs steps of pre-configured decision making, whether predicted or in real time, based on implement data read, to define the best movement route for the autonomous tractor vehicle and/or autonomous tractor vehicle + implement (CVC). The present invention is located in the fields of mechanical engineering, computer engineering, data engineering and robotic engineering, focused on the area of autonomous vehicles.

## Description

### Field of the Invention

The present invention describes a system for an autonomous cargo transport vehicle that performs control configurations based on static data related to a road implement. The present invention is located in the fields of mechanical engineering, computer engineering, data engineering and robotic engineering, focused on the area of autonomous vehicles.

### Background of the Invention

Systems embedded in vehicles require several information to operate and control vehicle components, aiming to promote mobility solutions with high performance and comfort, in addition to reducing accidents and human and material losses. In autonomous vehicles, the information must be even more precise, with the aim of enabling the use of these vehicles at different levels of automation, complying with local legislation.

Autonomous vehicles are typically provided with a plurality of sensors, radars and cameras arranged in different parts of the vehicle that identify obstacles in real time and collect vehicle operating parameters, as well as through trajectory mapping systems that identify the path being or to be traveled. In addition, systems are used that control the vehicle using artificial intelligence, which processes an intense flow of data obtained by sensors.

Based on this, the advancement of autonomous vehicles proposes five levels of automation. Level 1 for vehicles having some driving assistance. Level 2 allows the absence human intervention for a few seconds, with the vehicle traveling on specific roads. Level 3 requests human intervention when necessary. Level 4 passes the driving responsibility from the driver to the vehicle, with use limited to highways. Level 5, being the maximum level of automation, where human intervention is unnecessary regardless of the type of road on which the vehicle travels.

In the cargo transportation segment, some autonomous vehicles have been developed and used in order to enable cargo to be transported without (or with minimal) driver action according to one of the five levels of automation. In many of these cases, autonomous vehicles use road implements coupled to tractor vehicles, forming a Cargo Vehicle Combination (CVC).

For this application of CVCs, it has been verified that state-of-the-art autonomous cargo transport vehicles need to use complex sensing systems embedded in the road implements themselves, so that these implement sensors are responsible for sending data to the tractor vehicle controller. With this, the controller is configured to process a huge amount of data relating to vehicle dynamics, for example, speed, acceleration, inclination, braking, geo-referencing, among others, both from the vehicle itself and the implement. Furthermore, the data flow is carried out continuously or in real time. Thus, these state-of-the-art systems make it impossible for old road implements (that is, those that do not naturally have this sensing) to be used, in addition to technically complicating and making the final product more expensive. In these types of solutions, where there is dynamic data, the controller needs to read the implement's sensors in real time, especially when starting its route.

Another type of solution verified in the state of the art is the use of databases that store which trajectories or routes the tractor vehicle should follow. This solution, however, limits the trajectory space, since they are mostly used in logistics yards, and the autonomous tractor vehicle is restricted to the limited trajectory space.

In the search for the state of the art in scientific and patent literature, the following documents were found that deal with the subject:

US2019118814 discloses an autonomous tractor vehicle equipped with a control system, and a set of sensors such as cameras, LiDAR sensors, proximity sensors, infrared sensors, sonar sensors, etc., the sensors being positioned on the autonomous tractor vehicle and on the implement coupled to the tractor vehicle aiming to replace lights that indicate vehicle dimensions for safer maneuvering. To do this, the control system calculates and/or generates brake, acceleration and steering commands, in addition to planning trajectories for the tractor-trailer vehicle movement based on signals coming based on the dynamic data read by the sensors, requiring the control to begin a trajectory identifying all the implement's data and, computing in real time the best ways to operate the vehicle.

US2021339771 shows a method and apparatus for controlling an autonomous commercial vehicle, being capable of controlling the vehicle based on information captured by sensors such as camera, radar and LiDAR. The information captured includes position, weather, speed, internal fault, as well as acceleration measurements and checking whether a trailer is coupled. When the trailer is coupled, the trailer specification is calculated based on information obtained by sensors, with the calculated specifications being length, volume, weight, type and format. From this information, corrections and a level are calculated for a driver to interfere or not in driving thereof. However, to obtain vehicle corrections and control, the US2021339771 method requires calculations based on vehicle dynamics information, read continuously by the sensors.

BR112020017031 shows various systems for operations in logistics yards such as distribution centers and ports, controlling, using sensors, a tractor vehicle that performs operations such as loading, maneuvering, coupling, identifying a trailer, reversing assistance and moving between parking lots duly demarcated. For identification and coupling, a sticker with RFID or ARTag technology placed on the trailer provides information such as the number and type of trailer for a guardhouse, as well as the positions of a connector for coupling the trailer. However, the tractor vehicle control of BR112020017031 is based on data read by a plurality of sensors reading data about the vehicle's dynamics, with the tractor vehicle control being devoid of trailer identification. Furthermore, control is limited to automation levels 1 and 2, restricting the space for the tractor vehicle's trajectory and operations within the space. Furthermore, the means of identification proposed in BR112020017031 are limited to the locations of the coupling connectors, so that the vehicle can identify the right place to couple with the trailer.

US2019364406 discloses a system for wireless communication between a tractor vehicle and trailer via the fifth wheel-king pin coupling. The system allows the exchange of data and/or instructions between the vehicle and the trailer when the transceivers are within an operating distance of up to 1 meter through transceivers associated with the tractor vehicle 's fifth wheel and transceivers associated with the trailer's kingpin. Thus, transceivers transmit data such as trailer identification data, trailer data such as axle weight and wheel speed, command to a trailer rear camera, commands for trailer control such as lighting, image data obtained by the rear camera, etc. However, the data, obtained by the US2019364406 transceivers, is used to control the tractor vehicle to a level 1 of automation, like a driving assistant.

BR 112019018301-9 shows an autonomous or semi-autonomous dolly, where a dolly is a tractor vehicle without a driver's cabin, but equipped with steering and coupling systems to pull one or more semi-trailers, forming a CVC. Each of the BR 112019018301-9 vehicles forming the CVC has an automatic coupling device, a control unit that determines speed and position through sensors, a geo-referencing system, a communication resource between CVC vehicles, as well as a joint angle sensor. Using information such as relative speed between vehicles, the autonomous dolly performs automatic coupling/uncoupling according to road conditions, even with the CVC in motion.

From this, the prior art lacks systems that identify a drived vehicle for a tractor vehicle, in a simpler way, dispensing with the use of a plurality of sensors linked to the intense flow of data sent continuously or in real time over vehicle dynamics. In this sense, systems have been pursued for controlling vehicles for different levels of automation, enabling the traffic of autonomous cargo transport vehicles regardless of the type of road and route.

Thus, from what can be inferred from the researched literature, no documents were found anticipating or suggesting the teachings of the present invention, so that the solution proposed herein has novelty and inventive activity against to the prior art.

### Summary of the Invention

In this way, the present invention solves the problems of the prior art based on a system for an autonomous cargo transport vehicle, which identifies a drived vehicle for an autonomous tractor vehicle by means of a target containing static data from the drived vehicle, so that the identification allows the tractor vehicle control to be configured based on the static data that is related to the drived vehicle. Thus, the present invention simplifies the control of autonomous cargo transport vehicles, promoting the use of vehicles on any roads and routes for different levels of automation, in addition to providing safety and drivability of the autonomous transport vehicle.

To this end, the system of the present invention allows a tractor vehicle to read data from a road implement, identify the implement's characteristics through this data, couple mechanically and electronically to the implement and, based on the static data read of the implement the controller/processor embedded in the tractor vehicle performs decision-making steps both in real time and previously defined to define the best route for moving the tractor vehicle and/or coupling tractor vehicle + road vehicle. Additionally, the processor considers vehicle dynamics data, geo-referencing and highway data previously obtained and/or collected to contribute to route decision making.

Thus, in a first object, the present invention shows a smart system for an autonomous cargo transport vehicle, the autonomous vehicle comprising a drived vehicle (3) and an autonomous tractor vehicle (4), wherein the smart system provides at least the identification of the drived vehicle (3) to the tractor vehicle 4), the smart system comprising a target (1) comprising at least one static data (2) of the drived vehicle (3); and a processor (5) that executes at least one control configuration of the tractor vehicle (4) based on static data (2) from the target (1).

In a second object, the present invention shows a configuration system for an autonomous cargo transport vehicle, wherein the autonomous vehicle comprises a v (3) and an autonomous tractor vehicle (4) equipped with a processor (5 ) embedded, with the configuration system comprising a target (1) comprising at least one static data (2) of the drived vehicle (3); and a data memory (6) communicating with the processor (5); wherein the processor (5), based on the static data (2) coming from the target (1), executes at least one control configuration stored in the data memory (6).

In a third object, the present invention shows a road implement (3) comprising a road implement identification system (3) for a tractor vehicle (4), with the road implement (3) comprising a target (1) related to the at least one static data (2) from the road implement (3), wherein the target (1) is capable of interacting with at least one reading device from the tractor vehicle (4), and also the static data (2) is related to at least one control configuration of the tractor vehicle (4).

An identification method for an autonomous cargo transport vehicle is also an object of the present invention, the autonomous vehicle comprising a drived vehicle (3) and an autonomous tractor vehicle (4) with an embedded processor (5), wherein at least the identification of the drived vehicle (3) is provided for the tractor vehicle (4), and the method comprises the steps of detecting an event to initiate the identification of the drived vehicle (3 ) for the tractor vehicle (4); identification of the drived vehicle (3) from reading at least one static data (2) of the drived vehicle (3); and executing at least one control configuration of the tractor vehicle (4) by means of the processor (5) based on the static data (2) of the drived vehicle (3).

These and other objects of the invention will be immediately appreciated by those skilled in the art and will be described in detail below.

### Brief Description of the Figures

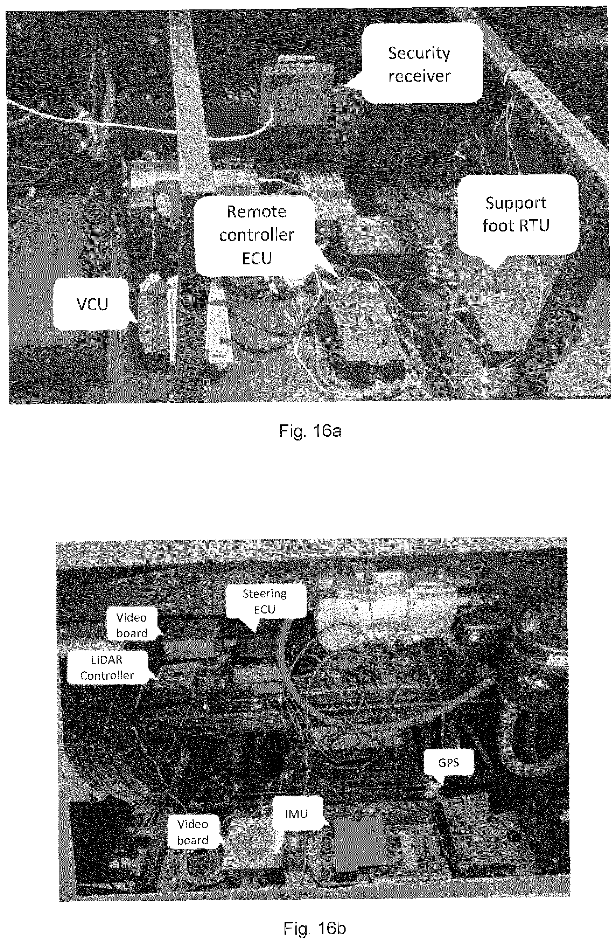

The following figures are presented:
Fig. 1 illustrates a scheme of the smart system for an autonomous cargo transport vehicle of the present invention, which executes control configurations of the tractor vehicle (4) based on static data (2) from the drived vehicle (3).
Fig. 2 illustrates a scheme for the smart system of the present invention, wherein the memory (6), being associated with a remote location, stores control settings.
Fig. 3 illustrates a scheme for the smart system of the present invention, wherein the memory (6) is associated with the drived vehicle (3) itself.
Fig. 4 illustrates a scheme of a configuration system identifying the road implement (3) for the dolly (4).
Fig. 5 illustrates a scheme for the smart system that provides identification of at least two implements (3) for the tractor vehicle (4)
Fig. 6 demonstrates an identification concept of the present invention, represented by a processor (5) that executes control configurations of the tractor vehicle (4) based on static data (2) coming from the target (1).
Fig. 7 shows a flowchart of steps illustrating an embodiment of the identification method for an autonomous cargo transport vehicle.
Fig. 8 shows an embodiment of an operating scenario for the autonomous tractor vehicle (4) of the present invention transporting an implement (3) from one point to another, which illustrates the decision-making carried out by the processor (5) along the routes (100), (101) and (102), in view of the presence of a pedestrian (12).
Fig. 9 shows an embodiment of an operating scenario for the autonomous tractor vehicle (4) of the present invention transporting an implement (3) from one point to another, which illustrates the decision-making carried out by the processor (5) along the routes (103), (104) and (105), where on route (103) the autonomous tractor vehicle (4) needs to return and go through another path due to the presence of a static obstacle (13) on the trajectory.
Fig. 10 shows an embodiment of an operating scenario for the autonomous tractor vehicle (4) of the present invention transporting an implement (3) from one point to another, which illustrates the decision-making carried out by the processor (5) along the routes (106), (107) and (108), where on routes (106) and (107) the autonomous tractor vehicle (4) avoids static obstacles (13) present on the trajectory.
Fig. 11 illustrates embodiments of autonomous tractor vehicles (4) of the invention for coupling to a road implement (3).
Fig. 12 shows a view of an embodiment of the autonomous tractor vehicle (4) for lane runs.
Fig. 13 shows an application of the system of the present invention for an autonomous tractor vehicle (4) coupling maneuver to the implement (3).
Fig. 14 shows embodiments of targets (1) arranged in a front region of the road implement (3).
Fig. 15 shows an embodiment of an automatic support foot lifting device.
The set of Figs. 16 shows an embodiment of a processor (5) that executes control configurations of the autonomous tractor vehicle (4). Fig. 16a shows an embodiment of a control architecture that executes control algorithms. Fig. 16b shows the control architecture comprising automation modules and an inertial measurement unit (IMU).

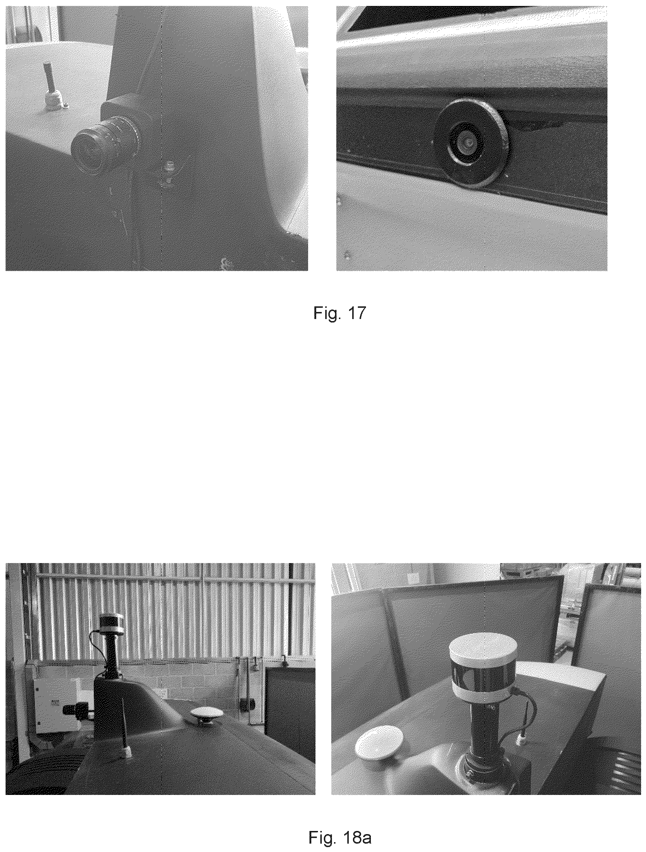

Fig. 17 shows embodiments of cameras for computer vision to read the target (1).

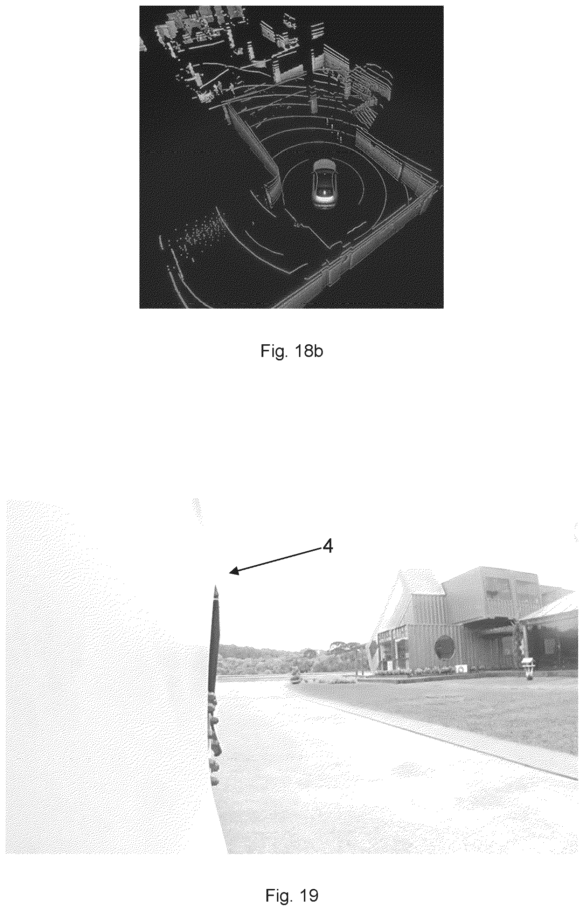

Figs. 18 show an embodiment of a LiDAR sensor, which reads and complements with data to control the tractor vehicle (4). Fig. 18a shows an embodiment of the LiDAR attached to the autonomous cargo transport vehicle. Fig. 18b represents a simulation using LiDAR.
Fig. 19 shows a test of the autonomous tractor vehicle (4) when running.

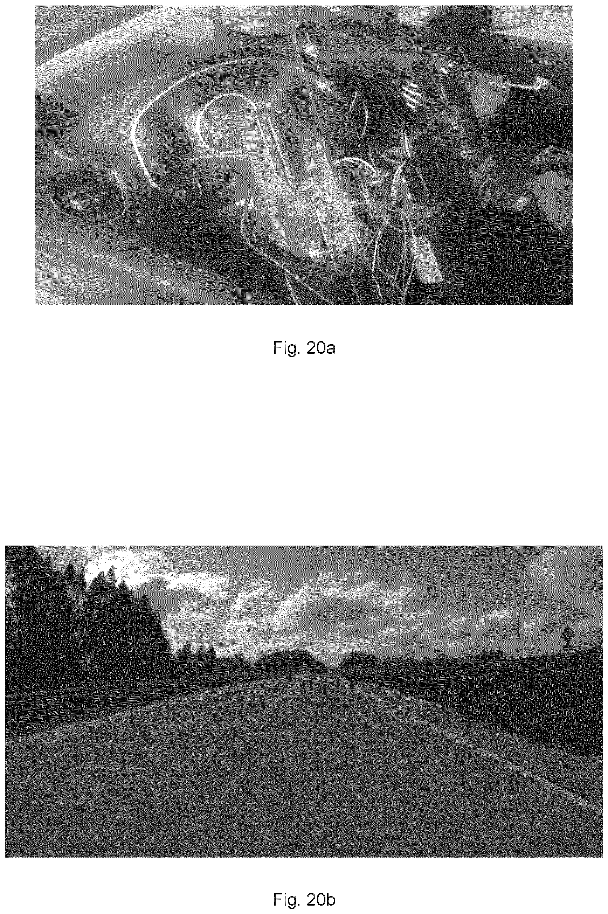

Figs. 20 show tests carried out on a lane. Fig. 20a shows a test for steering control of the tractor vehicle (4). Fig. 20b shows a lane detection test on the runway.

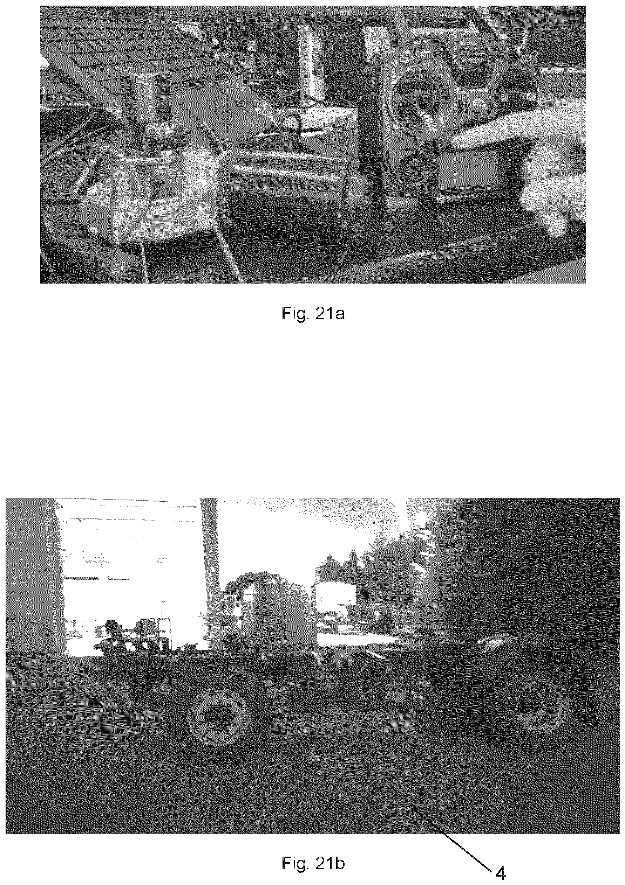

Figs. 21 show tests of operations via remote control. Fig. 21a shows a test carried out on a bench. Fig. 21b shows a test of the tractor vehicle (4) controlled using the remote control.

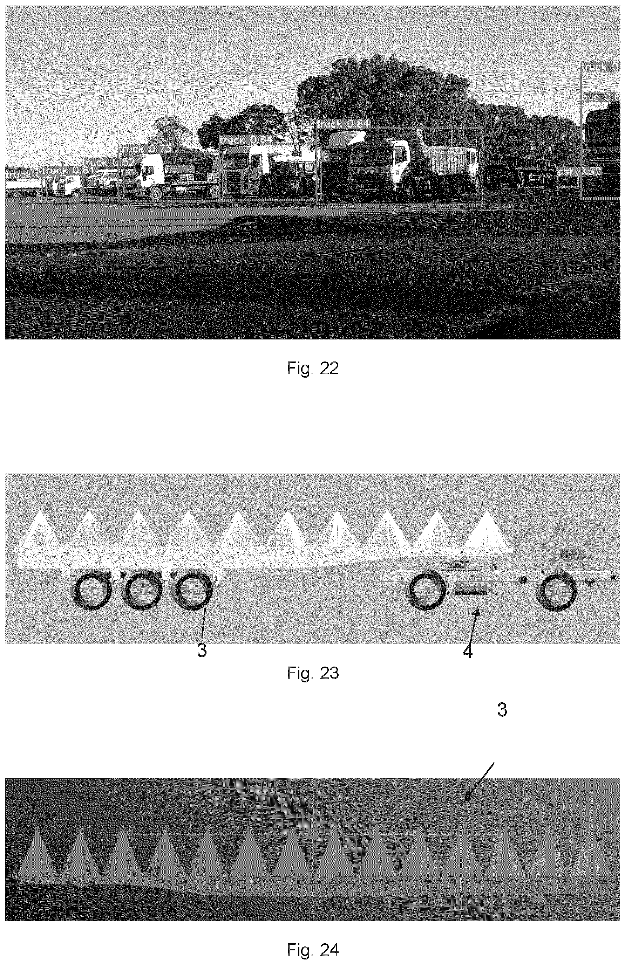

Fig. 22 shows tests carried out on the lane using a camera that identifies vehicles on the lane.
Fig. 23 shows a dynamic and kinematic modeling for a test of the system of the present invention.
Fig. 24 shows a load on the dynamic and kinematic modeling presented in Fig. 23.

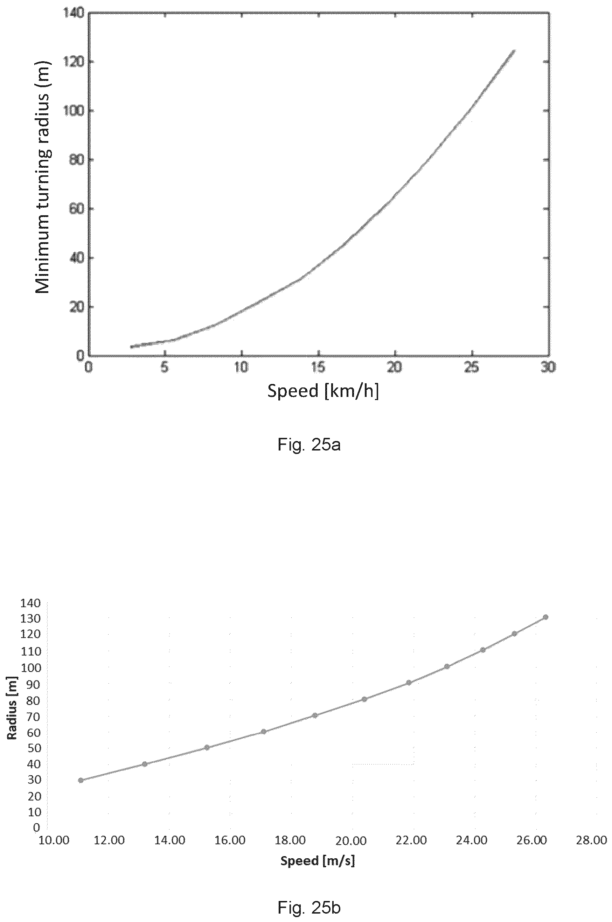

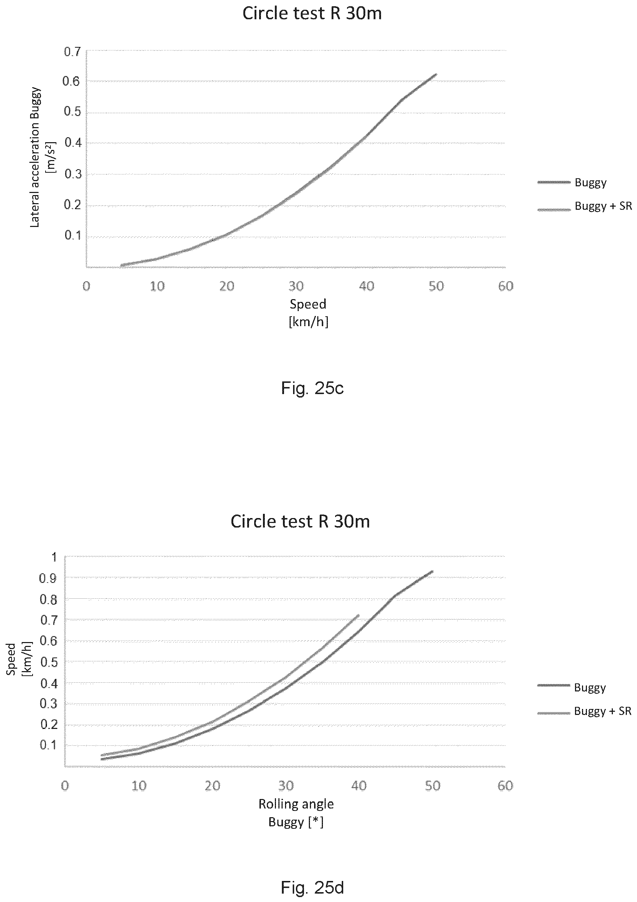

Figs. 25a to 25d show graphs obtained in dynamic and kinematic modeling simulations. Figs. 25a and 25b show the speed as a function of the turning radius for the CVC, with a minimum turning radius. Fig. 25c shows the lateral acceleration of the tractor vehicle (4) as a function of the speed of the tractor vehicle (4), the tractor vehicle (4) being a buggy, comparing when this buggy is uncoupled and when it is coupled to the road implement (3), this implement (3) being a semi-trailer (ST). Fig. 25d shows the speed as a function of the roll angle of the tractor vehicle (4), making the same comparison as the graph in Fig. 24c.

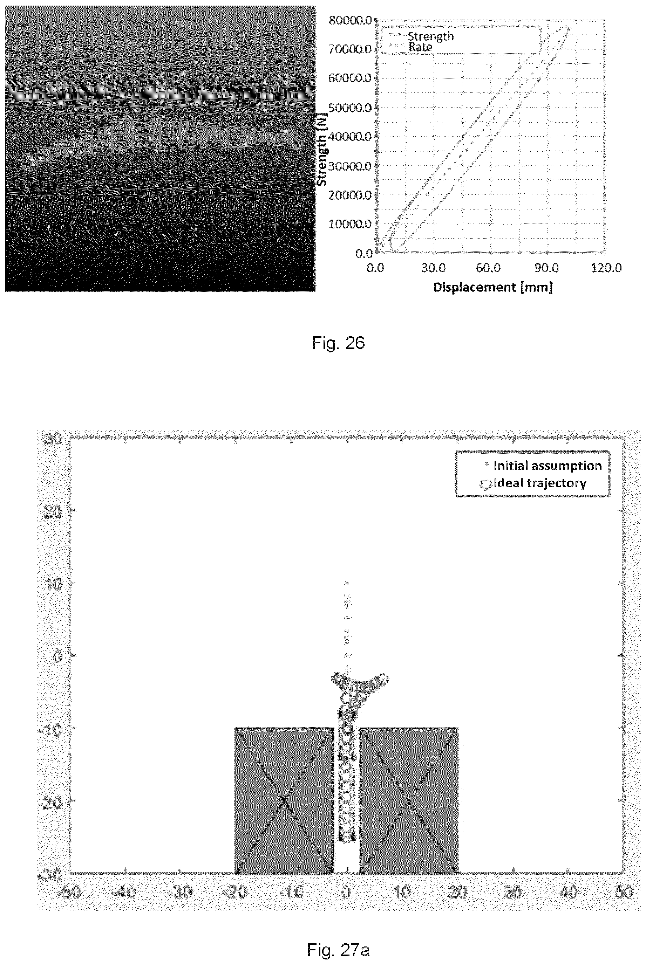

Fig. 26 illustrates a modeling of CVC suspensions.

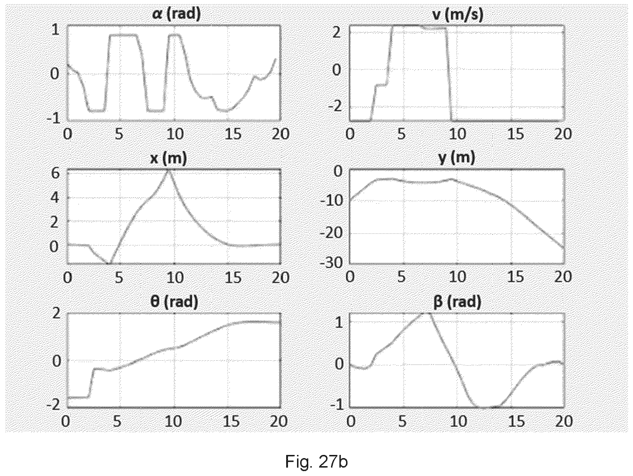

Figs. 27 show simulations of coupling and parking maneuvers. Fig. 27a shows a comparison between a preliminary trajectory and an optimal trajectory for the tractor vehicle (4). Fig. 27b shows data graphs relating to the trajectory taken by the tractor vehicle (4).

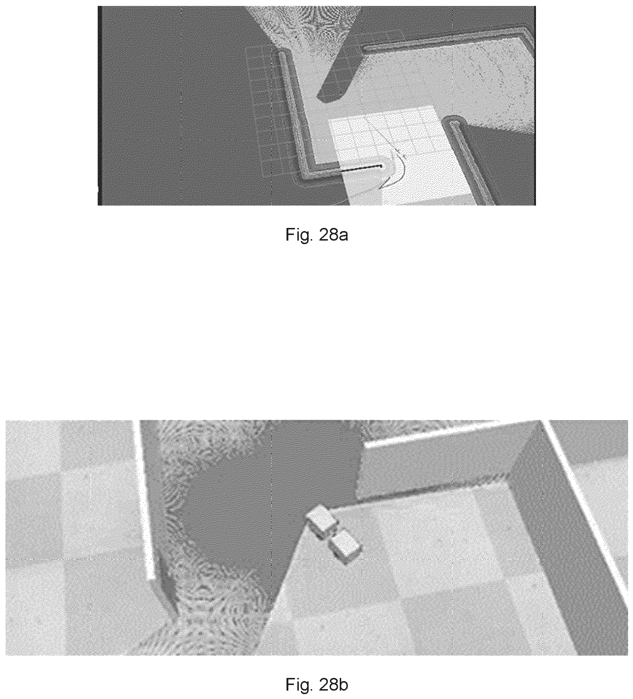

Fig. 28 shows a simulation of the system of the present invention using the LiDAR sensor. With this, the system configures a real-time mapping shown in Fig. 28a, based on a previously defined mapping shown in Fig. 28b.

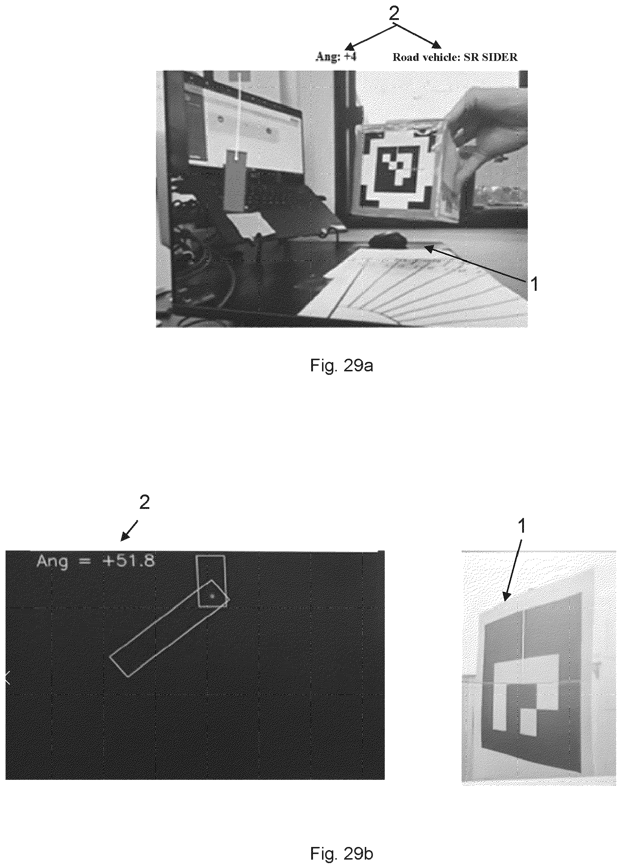

Figs. 29 show an embodiment of identification of the drived vehicle (3) by reading static data from the target (1). Fig. 28a shows a test of the coupling maneuver. Fig. 28b shows calculation of an angle between the drived vehicle (3) and the tractor vehicle (4).

### Detailed Description of the Invention

Vehicles generally have at least one vehicle control unit (VCU), such as a vehicle's brain that executes commands based on data and operations. Therefore, such data determines control settings for executing commands through the VCU. In the case of autonomous vehicles, this control unit is provided with a processing core embedded in the unit or operating in communication to enable the reading and processing of information for decision-making regarding the vehicle's operational commands. Within the scope of the present invention, a configuration based on static, or initial, data is proposed, which is related to the road implement in such a way that this configuration is implemented or accessed by the vehicle control unit regardless of the level of automation. For the purposes of the present invention, the autonomous vehicle must be interpreted as a vehicle within any level of automation, that is, vehicles that still have human intervention (of varying natures) can be considered to vehicles that operate entirely autonomously.

To this end, as a first object, the present invention presents a smart system for an autonomous cargo transport vehicle, the autonomous vehicle comprising a drived vehicle (3) and an autonomous tractor vehicle (4), wherein the smart system provides at least the identification of the drived vehicle (3) for the tractor vehicle (4), wherein the Smart system comprises a target (1) comprising at least one static data (2) of the drived vehicle (3); and a processor (5) that executes at least one control configuration of the tractor vehicle (4) based on static data (2) from the target (1).

For illustration purposes, a "tractor vehicle" (4) is any vehicle, regardless of the level of automation, which drives a cargo vehicle, forming a CVC by coupling the drived vehicle (3) to the tractor vehicle (4). In one embodiment, the tractor vehicle (4) is an autonomous dolly for transporting cargo. In another embodiment, the tractor vehicle (4) is an autonomous truck.

Also, for illustration purposes, the "drived vehicle" (3) is a road implement or implement, being a trailer or a semi-trailer. For the purposes of the present invention, the CVC is formed by the coupling between the tractor vehicle (4) and at least one drived vehicle (3).

Therefore, for both coupling and movement of coupled vehicles, it is necessary to identify the drived vehicle (3) to the tractor vehicle (4) or the tractor vehicle (4) to drived vehicle (3), so that the VCU receives the data to control the autonomous vehicle.

In one embodiment, the tractor vehicle (4) has an embedded processor (5), which executes control settings of the tractor vehicle (4). In one embodiment, the processor (5) is a VCU. The processor (5) is provided with at least one autonomous control algorithm for the tractor vehicle (4), the algorithm being formed by commands, routines, subroutines, decision making, etc., for the operation of the autonomous vehicle itself. In other words, the processor (5) executes commands from the autonomous control algorithm for actuators to automatically operate operations such as acceleration or deceleration, steering, braking, coupling, etc. For the purposes of exemplification, and within the scope of the invention, the control algorithm can be considered based on the teachings of the prior art, which proposes different solutions, complementary or not, for algorithms of the nature of controlling autonomous vehicles.

In the context of the invention, it is proposed that the processor (5) executes at least one control configuration, where said control configurations are executed based on at least one static data (2).

For the purposes of the present invention, static data (2) is previously defined data that has a relationship with at least one information, characteristic and/or parameter of the drived vehicle (3), unlike dynamic data that has variations significant due to variations in data read by numerous sensors. This static data (2) is previously defined by an operator or machine with neural networks, based on characteristics/parameters of the drived vehicle (3), and can be changed by the operator, machine or pre-defined automatic commands, prior to its use/reading by the processor (5), as there is any change in the characteristics/parameters of the drived vehicle (3). For illustration purposes, these changes to the characteristics/parameters of the drived vehicle (3) refer to status changes, for example, vehicle loading status. In one embodiment, the static data (2) is constant in a certain time interval, during a movement and/or before the movement of the tractor vehicles (4) or drived vehicles (3), or until it has triggered some event.

From the static data (2), to execute the autonomous control algorithm, the processor (5) considers at least one control configuration. For the purposes of the present invention, the control configuration is a set of configurations, a set of commands, one or more routines or subroutines that feed the autonomous control algorithm, so that these control configurations are directly related to the drived vehicle (3). Control configurations are stipulated based on characteristics and/or parameters of the drived vehicle (3), being previously defined by an operator, programmer or machine equipped with a neural network. For exemplary purposes, without limiting the scope of the invention, control configurations are defined based on static/quasi-static (or previously known) characteristics/parameters of the drived vehicle (3), such as dimensions, models, loading status, number of axles, whether it has sensors or not, whether it is equipped with an electrified power train, etc. Based on these characteristics/parameters, the control configurations can be different from each other. In one embodiment, each control configuration is linked to at least one autonomous control algorithm.

In one embodiment, the control configuration is a pre-configuration or subroutine for the vehicle's main control algorithm. In other words, the control configuration is an initial pre-setup for the tractor vehicle (4) control algorithm. In one embodiment, the pre-setup is a listing of parameters related to driving the drived vehicle (3).

In this way, the autonomous control algorithm accesses the control configuration to start or execute the autonomous vehicle's operational commands. In an embodiment wherein the control configuration is a pre-setup, the algorithm accesses the pre-setup before a movement of one of the driven vehicles (3) or tractor vehicles (4). In an embodiment wherein the vehicles are decoupled, the algorithm access occurs before a movement of the tractor vehicle (4). In an embodiment wherein the drived vehicle (3) is coupled to the tractor vehicle (4) forming the CVC, the algorithm access occurs before a movement of the CVC. In these embodiments, the accesses aim to verify the control settings for the movement of the drived vehicle (3) by the tractor vehicle (4).

In one embodiment, from the static data (2) of the drived vehicle (3) such as dimensions, model, loading status, number of axles, whether it has sensors or not, whether it is provided with an electrified power train, a combination of this static data (2) is related to a control configuration, so that different static data (2) generate combinations related to different control configurations. In one embodiment, the control settings correspond to power, braking, acceleration, autonomy parameters as a function of at least one data. Therefore, each control configuration is executed by a respective autonomous control algorithm.

In one embodiment, the control configuration describes requirements to be verified by the control algorithm. In one embodiment, the control configuration requirements are related to the operation of acceleration or deceleration, steering, breaking, coupling etc. For the purposes of the present invention, verification of requirements allows for compatibility conditions between the drived vehicles (3) and tractor vehicle (4). Therefore, the control settings are a pre-setup for the vehicle dynamics of the autonomous cargo transport vehicle. Furthermore, the control settings provide the control algorithm with a GO/NO-GO authorization, promoting reliability of the vehicle dynamics for the autonomous vehicle. In one embodiment, the GO/NO-GO authorization is provided before a movement of one of the drived vehicles (3) or tractor vehicles (4), before a coupling between the vehicles, that is, before an operation of the autonomous control.

For the present invention, the data used is static data (2) related to the drived vehicle (3), and the static data (2) is linked to at least one target (1). In one embodiment, the target (1) is a passive element. In one embodiment, the target (1) is an element that emits electromagnetic signals when stimulated, e.g., electromagnetically. In one embodiment, the target (1) is remotely readable to a device. In one embodiment, the target (1) communicates via physical connections.

In one embodiment, the target (1) with static data (2) of the drived vehicle (3) comprises a code readable by the tractor vehicle (4) that informs the smart system of the present invention the static data (2) of the drived vehicle (3). In one embodiment, the code is readable by means of, for example and not limited to, RFID, QR Code, ArUco, bar code, NFC, Bluetooth^{®}, etc. For such implementations, static data (2) is assigned, collected or defined in advance, but can be updated in advance or in real time. In one embodiment, the static data (2) is updated when a predicted variation occurs, such as a change in loading status, number of axles, etc.

Regarding positioning, the target (1) is related to the drived vehicle (3). In one embodiment, the target (1) is positioned on the drived vehicle (3) itself, in at least one position on the structure of the drived vehicle (3). In a further embodiment, the target (1) is disposed at a vicinity point of the drived vehicle (3). In one embodiment, the vicinity point is located external to the drived vehicle (3). In this embodiment, the points are in a location close to and/or next to the drived vehicle (3).

From this, the control configuration is relative to at least one static data (2), that is, the control configuration is a function of static data (2), so that the control configuration is parameterized by the static data (2). In one embodiment, the processor (5) executes a control configuration determined by the static data (2).

Additionally, a data memory (6) stores at least one control configuration. Furthermore, in one embodiment, the memory (6) contains static data (2) and control settings, wherein the memory (6) is communicating with the processor (5) of the tractor vehicle (4). In a further embodiment, the memory (6) is communicating with the target (1), storing static data (2) originating from the target (1).

In one embodiment, the memory (6) is associated with the drived vehicle (3), the memory (6) being a component connected to the drived vehicle (3). In one embodiment, the memory (6) is associated with the tractor vehicle (4), forming a direct connection with the processor (5). In one embodiment, the data memory (6) is associated with the target (1), forming a single connected component or components. In one embodiment, the data memory (6) is associated with a remote location communicating with the processor (5), the remote location being a server or a data cloud. In one embodiment, the data memory (6) is associated with a combination thereof.

In an embodiment wherein the memory (6) is a component of the drived vehicle (3), the memory (6) stores control settings for prompt execution of the control settings by the processor (5) embedded in the tractor vehicle (4). In another embodiment, the memory (6) stores control configurations and static data (2), so that the processor (5) chooses the control configuration to be executed according to the static data (2) of the drived vehicle (3). In another embodiment, the memory (6) stores static data (2) relating to the drived vehicle (3).

In one embodiment, the static data (2) is a physical magnitude data. For exemplification purposes, the physical magnitude data is structural dimensions of the drived vehicle (3) such as maximum width, maximum length, connector height for coupling and maximum load capacity.

In one embodiment, the static data (2) is a catalog information data. For illustration purposes, a catalog information data corresponds to the refrigerator model, tank, container ship, stork, sider, bulk carrier, bunk, tipper, among other models; energy efficiency; the emission of pollutants; the types of cargo possible for transport; the number of axes; frequency for maintenance; autonomy; the existence of applied sensors; the use of electrified power trains, etc.

In one embodiment, static data (2) corresponds to a control configuration. In one embodiment, static data (2) is a combination thereof. Therefore, the target (1) provides static data (2) for identifying the drived vehicle to the tractor vehicle (4), so that the processor (5) executes the appropriate control settings according to the static data (2) provided.

Furthermore, in another embodiment, static data (2) is denoted as quasi-static data, where it has predicted variations. In this context, the quasi-static data (2) is endowed with previously known variations, for example, the predicted variation is related to the vehicle's loading status, that is, the static data can carry the information of whether the drived vehicle (3) is loaded or not. With this, the smart system executes control settings based on the previously defined value of the load weight, not requiring the use of a embedded scale in the autonomous load transport vehicle. In another example, the quasi-static data carries information about the number of axles that are in operation in the drived vehicle (3), this information being previously defined.

In a second object, the present invention shows a configuration system for an autonomous cargo transport vehicle, wherein the autonomous vehicle comprises a drived vehicle (3) and an autonomous tractor vehicle (4) equipped with a processor (5 ) embedded, with the configuration system comprising a target (1) comprising at least one static data (2) of the drived vehicle (3); and a data memory (6) communicating with the processor (5); wherein the processor (5), based on the static data (2) coming from the target (1), executes at least one control configuration stored in the data memory (6).

In one embodiment, the configuration system of the invention is applied to a cargo transport vehicle lacking a sensing system for controlling the vehicle. As a result, the invention allows the vehicle to become autonomous under one of five levels of automation. In one embodiment, the cargo transport vehicle is provided with a sensing system, so that the configuration system provides identification of driven vehicles (3) to promote reliability of vehicle dynamics in autonomous vehicles. For the purposes of this second object, the drived vehicle (3) is referred to as a road implement (3) and the tractor vehicle (4) as an autonomous tractor vehicle (4).

To achieve this, the configuration systems have a detector that allows identification of the drived vehicle (3) to the tractor vehicle (4). In one embodiment, when a tractor vehicle (4) approaches the drived vehicle (3), the detector identifies a target (1) associated with the drived vehicle (3), wherein the target (1) contains control settings and/or static data (2) of the drived vehicle (3).

In one embodiment, the detector stimulates the target (1) by means of electromagnetic signals. In one embodiment, the detector reads the target (1). In one embodiment, the detector comprises a code reader capable of wirelessly reading and identifying at least one target (1) with static data (2) from the drived vehicle (3). For these embodiments, the detector is a camera; a radio frequency reader; a pairing device; CAN communication cabling, among other forms that start communication at a certain moment.

Thereby, in one embodiment, the target (1) is readable by means of, for example and not limited to, RFID, QR Code, ArUco, bar code, NFC, Bluetooth^{®}, etc. In a further embodiment, the target (1) with static data (2) is connected with an updateable database that allows inserting, removing and/or updating information about the drived vehicle (3).

Thus, when communication between the drived vehicle (3) and the tractor vehicle (4) is established, the detector obtains the static data (2) from the target (1) and sends it to a data memory (6).

Additionally, the memory (6) stores at least one control configuration to be executed by the processor (5) embedded in the tractor vehicle (4). In one embodiment, the memory (6) is a component connected to the tractor vehicle (4). In one embodiment, the memory (6) is connected to the drived vehicle (3) storing control settings related to the drived vehicle (3). In another embodiment, the memory (6) is a data cloud, such as a remotely located server.

In one embodiment, road implement data (3) comprises any data characterizing the implement (3), such as at least one of: implement model (3); implement dimension (3), load capacity; type of cargo transported; loading status, number of axles, whether it has sensors or not, whether it is equipped with an electrified power train; and/or a combination of the above. In this sense, for exemplification purposes, the processor (5) is capable of making route decisions by checking data on the dimension and model of the implement (3), in addition to the type of load transported.

In one embodiment, the dimension data of the implement (3) comprises the structural configuration of length and width of the implement (3). In one embodiment, the load capacity data and type of load transported data comprise the amount of weight that the implement (3) is capable of transporting and what type of load can be transported according to the model of the implement (3).

In one embodiment, the processor (5) embedded in the autonomous tractor vehicle (4) defines at least one route to be traveled based on, in addition, vehicle dynamics data. In one embodiment, the vehicle dynamics data comprises data obtained in real time by sensors and/or previously obtained during the operation of the autonomous tractor vehicle (4) + road implement (3), forming the CVC, wherein the dynamics data includes, for example and not limited to, stability of the CVC on the lane, speed of the CVC, adherence of the CVC to the pavement, vertical movement of the implement chassis during operation, weight of the load carried by the implement, condition of the CVC brakes, etc., i.e. vehicle dynamics data comprises data from the operation of axles, shock absorbers, suspension, springs, wheels, chassis, brakes, etc.

In this way, vehicle dynamics data contributes to the processor (5) making decisions in real time to define the best route to be taken and/or to define alternative routes, in order to allow safe operation of the CVC.

Redundantly, aiming to increase safety during CVC operation, the autonomous tractor vehicle (4) reads a target (1) with static data (2) from the road implement (3) and, based on the road implement data (3) read, defines at least one route to be traveled through the processor (5). Thus, in a complementary way or in case of failure of the sensors that read the vehicle dynamics, the target (1) of the invention provides identification of the road implement (3) through static data (2) to execute control configurations of the autonomous tractor vehicle (4) from static data (2).

In one embodiment, the processor (5) comprises a control algorithm capable of receiving data from the road implement (3) and/or the autonomous tractor vehicle (4), processing said data and making operational decisions on the route to be traffic and/or real-time traffic to transport cargo from one point to another. For illustration purposes, the processor (5) is equipped with mathematical tools and/or logical systems that implement decision-making based on pre-established parameters and thresholds as a pre-setup. In one embodiment, decision making is based on a pre-setup or a GO/NO-GO authorization defined from the control settings.

In one embodiment, the processor (5) of the autonomous tractor vehicle (4) defines at least one route to be traveled based on, in addition, geo-referencing data.

In one embodiment, the geo-referencing data comprises mapping data of a route to be traveled by the autonomous tractor vehicle (4) or by the CVC, which are previously obtained from an updateable database and/or obtained in real time through monitoring systems, location, such as GPS.

In one embodiment, the processor (5) receives said data, whether geo-referencing, and generates a route to be traveled by the autonomous tractor vehicle (4) or by the CVC, wherein the generated route also considers the road implement data read by the autonomous tractor vehicle (4), which define whether a certain type of implement can travel on a certain route.

In this way, the geo-referencing data contributes to the processor (5) making decisions in real time to define the route to be taken and/or to define alternative routes.

In one embodiment, the processor (5) of the autonomous tractor vehicle (4) defines at least one route to be traveled based in addition on highway data.

In one embodiment, the highway data comprises data obtained in real time and/or previously obtained by means of at least one set of displacement sensors positioned in an external region of the autonomous tractor vehicle (4) and/or the road implement (3). In one embodiment, said highway data includes, for example, data of highway obstacles, highway conditions, detection of pedestrians crossing the road, etc., which are detected by said sensors.

In one embodiment, the autonomous tractor vehicle (4) comprises at least one set of displacement sensors positioned in at least one external region of said tractor vehicle (4). In one embodiment, the displacement sensors identify, for example, obstacles, terrain conditions, road traffic, etc., and allow the tractor vehicle (4) to operate autonomously.

Furthermore, whether static data (2), vehicle or highway dynamics data, such data is also read by highway components. In one embodiment, said component is fixed to the highway. With this, each autonomous transport vehicle passing on the highway is identified by reading the highway component. In one embodiment, said component is a passive element that emits electromagnetic signals, when stimulated e.g., electromagnetically. In one embodiment, said component is a smart lane light arranged along the highway for reading targets (1) of CVCs passing along the highway.

In a third object, the present invention shows a road implement (3) comprising a road implement identification system (3) for a tractor vehicle (4), with the road implement (3) comprising a target (1) related to the at least one static data (2) from the road implement (3), wherein the target (1) is capable of interacting with at least one reading device from the tractor vehicle (4), and also the static data (2) is related to at least one control configuration of the tractor vehicle (4).

In the implement manufacturing sector (3), each manufacturer has full knowledge of what information is sufficient, and often necessary, to pull an implement (3). In this context, the present invention makes it possible to identify the implement (3) for the tractor vehicle (4) that performs control configurations based on said identification.

For this, a target (1), relative to the implement (3), contains static data (2). In one embodiment, the static data is a physical magnitude data; a catalog information data; a control configuration; and/or a combination thereof. In one embodiment, the static data (2), relating to the implement (3), corresponds to dimensions, models, loading status, number of axles, whether it has sensors or not, whether it is provided with an electrified power train, etc.

Thus, in one embodiment, the identification of the implement (3) is a pre-setup for the autonomous control of the tractor vehicle (4). In one embodiment, the pre-setup corresponds to a GO/NO-GO authorization for driving the implement (3) by the tractor vehicle (4), promoting reliability of the CVC's vehicle dynamics regardless of the level of automation.

Additionally, in one embodiment, the static data (2) comprises identification or recognition data for the implement (3), as described previously, and at least one autonomous control algorithm for the tractor vehicle (4). Therefore, after reading or interacting the tractor vehicle (4) with the target (1), the implement (3) transfers the entire tractor vehicle (4) control algorithm, so that the entire tractor vehicle operation truck (4) is previously defined and sent by the implement (3). In this context, the CVC's intelligence is linked to the implement itself (3), so that the tractor vehicle control software (4) is downloaded by the implement (3) based on its pre-defined characteristics/parameters, the latter being as previously defined.

Furthermore, an object of the present invention is an autonomous dolly (4) comprising a road implement identification system (3), with the autonomous dolly (4) comprising a processor (5) provided with at least one autonomous control algorithm of the tractor vehicle (4), wherein the processor (5) executes at least one control configuration of the autonomous dolly (4) from at least one static data (2) of the road implement (3), being the static data (2) originating from a target (1); and the autonomous control algorithm considering the control configuration.

In one embodiment, the autonomous dolly (4) is any vehicle that allows it to be coupled to a road implement (3), for example, an autonomous tractor vehicle and/or tractor vehicle devoid of sensing systems, wherein the coupling between the dolly autonomous (4) and at least one road implement (3) form a Cargo Vehicle Combination (CVC).

In one embodiment, the autonomous dolly (4) of the present invention is capable of wirelessly reading at least one target (1) with static data (2) from the road implement (3) and identifying the characteristics of the implement (3) to be transported. In one embodiment, the target (1) comprises, for example and not limited to, RFID, QR Code, ArUco, bar code, NFC, Bluetooth ^{®}, etc.

In one embodiment, a processor (5) embedded in the autonomous dolly (4) receives static data (2) from the implement (3) linked to the target (1) and generates at least one route to be traveled by the autonomous tractor vehicle (4) and/or by CVC. In one embodiment, the processor (5) is capable of receiving data from the road implement (3) and/or the autonomous dolly (4), processing said data and making operational decisions on the route to be traveled and/or in real-time traffic.

In one embodiment, the data coming from the road implement (3) and/or the autonomous dolly (4) comprises at least one of: implement data; geo-referencing data, highway data; and/or a combination of the above.

In one embodiment, the implement data comprises any data characterizing the implement (3), such as at least one of: implement model; implement size, load capacity; type of cargo transported; implement dynamics; loading status, number of axles, whether it has sensors or not, whether it is equipped with an electrified power train, etc.

In one embodiment, the geo-referencing data comprises mapping data of a route to be traveled by the autonomous dolly (4) or the CVC, which is previously obtained from an updateable database and/or obtained in real time through data processing systems, location, such as GPS.

In one embodiment, the highway data comprises data obtained in real time through displacement sensors positioned on the autonomous dolly (4) and/or on the road implement (3) and/or data obtained from a database. In one embodiment, said highway data includes, for example, data of highway obstacles, highway conditions, detection of pedestrians crossing the road, etc., which are detected by said sensors.

An identification method for an autonomous cargo transport vehicle is also an object of the present invention, the autonomous vehicle comprising a drived vehicle (3) and an autonomous tractor vehicle (4) with an embedded processor (5), wherein at least the identification of the drived vehicle (3) is provided to the tractor vehicle (4), and the method comprises the steps of detecting an event to initiate the identification of the drived vehicle (3 ) for the tractor vehicle (4); identification of the drived vehicle (3) from reading at least one static data (2) of the drived vehicle (3); and executing at least one control configuration of the tractor vehicle (4) by means of the processor (5) based on the static data (2) of the drived vehicle (3).

For the method of the present invention, the processor (5) embedded in the tractor vehicle (4) executes control settings based on data. For the purposes of the present invention, the data is data relating to the drived vehicle (3), so that the method of the invention identifies the drived vehicle (3) to the tractor vehicle (4).

To achieve this, the method has the step of detecting an event to initiate the identification of the drived vehicle (3) for the tractor vehicle (4). Said event is defined by a moment wherein the identification of the drived vehicle (3) for the tractor vehicle (4) can be initiated, for example, a physical approach between the vehicles, an authorization from an operator, sufficient resolution for reading using a camera, etc. In one embodiment, the event provides access from the tractor vehicle (4) to static data (2) from the drived vehicle (3) and/or provides the static data (2) from the drived vehicle (3) to the tractor vehicle (4). In one embodiment, the event initiates communication between drived vehicle (3) and tractor vehicle (4), upon identification of a connection, communication or sufficient data resolution to initiate identification of the drived vehicle (3) for the tractor vehicle (4).

In one embodiment, event detection is performed using a reader, being a computer vision camera for reading static data (2). In one embodiment, detection is carried out by means of a device that electromagnetically stimulates the target (1) to provide static data (2). In an embodiment of providing static data (2), the static data is linked to a device with RFID technology, so that the event relates to the moment when there is sufficient electromagnetic excitation to begin data transmission. In an embodiment of providing static data (2), detection is carried out by connections, via cabling or remotely, after coupling between the drived vehicle (3) and the tractor vehicle (4). For this, detection occurs when the tractor vehicle (4) is approaching the drived vehicle (3) and reaches a point to establish communication between the vehicles. Furthermore, in one embodiment, the target (1) with static data (2) of the drived vehicle (3) is positioned on the drived vehicle (3) itself and/or in a location close to the drived vehicle (3).

From this, the method of the invention reads static data (2) from the target (1). In one embodiment, the step of reading a target (1) with static data (2) is performed by a tractor vehicle (4) identification tool. In one embodiment, the identification tool reads the target (1) with data from the drived vehicle (3) and said reading allows the identification of the characteristics of the implement (3), so that the data is received by a processor (5).

Through said reading, the tractor vehicle (4) identifies the drived vehicle (3) from the static data (2) linked to the target (1). In one embodiment, the static data (2) is a physical magnitude data, for purposes of exemplification without limiting the scope of the invention, maximum dimensions of the drived vehicle (3), height of the connector for coupling and maximum load capacity. Furthermore, in one embodiment, the static data (2) is catalog information related to the model of the drived vehicle (3), types of loads, number of axles, periodicity for maintenance; autonomy, whether it has sensors or not, whether it is equipped with an electrified power train, among others. Thus, the target (1) composes a static data listing (2), including control configurations. For this, the static data (2) is predefined and may undergo previously known variations.

Furthermore, the method of the invention has an additional step of storing static data (2) in a data memory (6). In one embodiment, the memory (6) stores at least one control configuration to be executed by means of the processor (5). In one embodiment, the memory (6) stores encrypted data, which can only be read by predetermined processors (5). That is, the method of the invention also performs identification of the tractor vehicle (4) for the drived vehicle (3).

Based on the identification of the drived vehicle (3), the method of the invention implements the execution of control configurations through the processor (5) embedded in the tractor vehicle (4). In one embodiment, each control configuration is a function of at least one static data (2). In one embodiment, the processor (5) chooses the control configuration based on static data (2). In other words, the control configurations are stipulated based on characteristics and/or parameters of the drived vehicle (3), being previously defined by an operator, programmer or machine equipped with a neural network. With this, the control configurations feed autonomous control algorithms.

Additionally, said execution of the control configuration is an execution of a pre-setup configuration. In one embodiment, the execution of the control configuration occurs before an initial movement of one of the driven vehicles (3) or tractor vehicle (4). In one embodiment, when the vehicles are coupled, said execution occurs before a movement of the CVC. In one embodiment, when the vehicles are uncoupled, said execution prepares the coupling of the tractor vehicle (4) to the drived vehicle (3). In one embodiment, when the vehicles are uncoupled, said execution checks whether the tractor vehicle (4) is capable of driving the drived vehicle (3).

With this, the pre-configuration checks compatibility conditions in relation to vehicle dynamics between the drived vehicle (3) and tractor vehicle (4). Thus, the control settings are a pre-setup for the vehicle dynamics of the autonomous cargo transport vehicle. Therefore, executing the pre-setup is a preparation for executing the autonomous control algorithm. In one embodiment, the execution of the pre-setup corresponds to a GO/NO-GO authorization for driving the drived vehicle (3) by the tractor vehicle (4).

Thus, the method of the invention has a step for executing an autonomous tractor vehicle (4) control algorithm, considering the execution of the control configuration. The execution of the autonomous control algorithms sends commands to actuators related to vehicle dynamics, for example purposes, operation of axles, shock absorbers, suspension, springs, wheels, chassis, brakes, etc., of the CVC. Thus, in real time or continuously, sensors read dynamic data to feed the autonomous control algorithm. In a simpler and more economical way in terms of data flow, the present invention allows control configurations to be executed, feeding the control algorithm, as a pre-setup of vehicle dynamics based on static data (2).

Consequently, based on the drived vehicle (3) data read by the tractor vehicle (4), the invention allows the processor (5) to generate at least one route to be traveled by the CVC, where the processor (5) defines the route that the drived vehicle (3) can travel and/or the route that has the best traffic conditions for the type of drived vehicle (3), such as a road implement (3).

In one embodiment, the mechanical-electronic coupling step allows the separate elements of the CVC (tractor vehicle and implement) to operate as a "single vehicle" and not as two individual vehicles, so that the processor (5) considers the data static ( 2) and the vehicular dynamics of the CVC to generate the routes to be traveled.

Additionally, in one embodiment, the vehicle dynamics data comprises data obtained in real time and/or previously obtained during the operation of the tractor vehicle (4) + road implement (3) (CVC), wherein the dynamics data includes, for example, and not limited, stability of the CVC on the lane, speed of the CVC, adherence of the CVC to the pavement, vertical movement of the implement chassis during operation, weight of the load carried by the implement, brake conditions, etc.

In one embodiment, the processor (5) receives real-time vehicle dynamics data and/or obtains it from a database during CVC operation and performs real-time decision-making steps to define the best route for CVC traffic.

In one embodiment, the method of the invention comprises an additional step of identifying, by the autonomous vehicle, highway data that contributes to defining at least one route to be traveled.

In one embodiment, the highway data comprises data collected in real time through displacement sensors positioned on the tractor vehicle (4) and/or on the road implement (3) and/or previously obtained from a database. In one embodiment, said highway data includes, for example, data of highway obstacles, highway conditions, detection of pedestrians crossing the road, etc., which are detected by said sensors.

In one embodiment, the method of the invention comprises an additional step of identifying, by the autonomous vehicle, geo-referencing data that contributes to defining at least one route to be traveled.

In one embodiment, the geo-referencing data comprises mapping data of a route to be traveled by the tractor vehicle (4) and/or the CVC, which is previously obtained from an updateable database and/or obtained in real time through location systems, such as GPS.

In one embodiment, the processor (5) receives geo-referencing data and performs a step of generating at least one route to be traveled.

In one embodiment, the route is recalculated by the processor (5) based on static data (2), vehicle dynamics data, highway data and geo-referencing data captured in real time during the operation of the CVC and/or previously obtained from a database in order to generate the best route and/or alternative route to be traveled by the CVC and/or the autonomous tractor vehicle (4).

Additionally, in another embodiment, vehicle dynamics data, highway data, geo-referencing data are obtained through fixed components on the highway. In this way, the present invention further optimizes the data flow and processing of autonomous vehicles.

In this sense, the present invention identifies a drived vehicle for an autonomous tractor vehicle, providing control configurations to be executed by the autonomous vehicle from static data. Thus, through data reduction and pre-setup configuration, the present invention allows autonomous vehicle dynamics to be safe and reliable for applying different levels of automation on any roads and routes.

For a better understanding and clarification of the present invention, the following examples are presented, where the examples shown herein are only intended to exemplify some of the countless ways of carrying out the invention, however without limiting the scope thereof.

### Example 1 - Static data

The static data (2) in this example shows parameters that are used in control configurations for autonomous vehicles regardless of the level of automation. In other words, static data (2) defines a control configuration or a setup, so that a static data (2) with a different content refers to a different control configuration. Therefore, the aforementioned control setups are functions of the static data itself (2).

Thus, to identify a road implement (3) for a tractor vehicle (4), the content of static data (2) is constant, since it has a direct relationship with the implement (3):
i. model: refrigerator model, tank, container carrier, stork, sider, bulk carrier, bunk, tipper, among other models;
ii. dimensions: maximum width, maximum length and maximum load capacity;
iii. presence of electrification items: battery, power train;
iv. axle parameters: number of axles, distance between axles;
v. coupling parameters: height of the connector for coupling, distance between king pin and front, distance between king pin and support feet;
vi. load type: dry; wet, chemical, flammable, etc.;
viii. use of sensors; and/or
viii. load presence: loading status and load distribution.

In this way, the implement (3) provides its said data (2) for executing the control setup. Thus, the control setup describes requirements for autonomous vehicle operations: acceleration or deceleration, steering, braking, power, coupling, etc., so this setup can be complementary to the tractor vehicle (4) control algorithm itself.

Otherwise, the static data (2) includes the control settings defined from the implement data (3). As an example, the requirements relate to limits and minimum parameters for executing a given operation:
i. cornering maneuvers: lateral acceleration and speed limits;
ii. parking maneuver: limit roll angle; and
iii. coupling: information on the support foot, whether it is automatic and whether it is in the retracted position.

Thus, the driving of the implement (3) by the tractor vehicle (4) depends on meeting the control configuration requirements, being a pre-setup/authorization for the movement of one of the tractor vehicles (4) or implement (3).

### Example 2 - Autonomous vehicle system

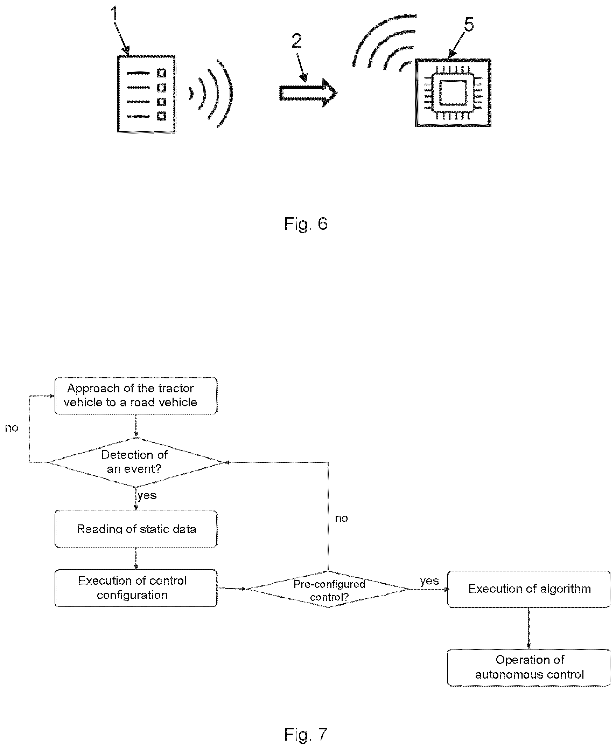

Based on the identification of the implement (3) provided by the static data (2), the processor (5) embedded in the tractor vehicle (4) executes the control settings (or setup provided by the implement). Prior to the setup execution step, some processor models (5) perform a step of checking conditions and compatibility parameters, based on information from the implement (3), which determines whether the tractor vehicle (4) is suitable for driving the implement (3). An exemplary flowchart of this operation is represented by Fig. 6, illustrating the execution of the control configuration on the processor (5), based on the static data (2) coming from the target (1) associated with the implement (3).

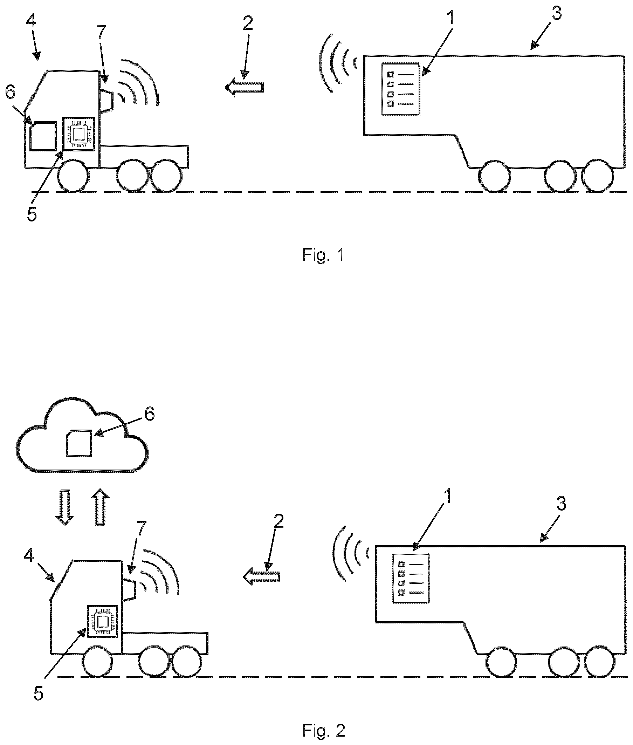

Figs. 1 to 4 show layouts for the system of the present invention, so that the target (1) is positioned on the implement (3), transmitting static data (2) to the tractor vehicle (4). Furthermore, a detector (7) is associated with the tractor vehicle (4) to identify the target (1) at a certain time when the tractor vehicle (4) approaches the implement (3) when detecting an event. The event is detected when the detector (7) identifies a device with remote technology such as RFID, a two-dimensional code such as a QR Code or ArUco. Furthermore, the detector (7) identifies a coupling between vehicles or physical connection via CAN communication. For example, the detector (7) is a camera positioned on the fifth wheel of the tractor vehicle (4). Said detector (7) communicates with the processor (5) and is capable of informing the processor (5) of the occurrence of the event, that is, the moment wherein the data is transmitted by the implement or read by the tractor vehicle (4).

Additionally, the system is provided with a data memory (6) that stores at least one control configuration/setup. The different setup variants are described below, but without limiting other configurations that can be implemented.

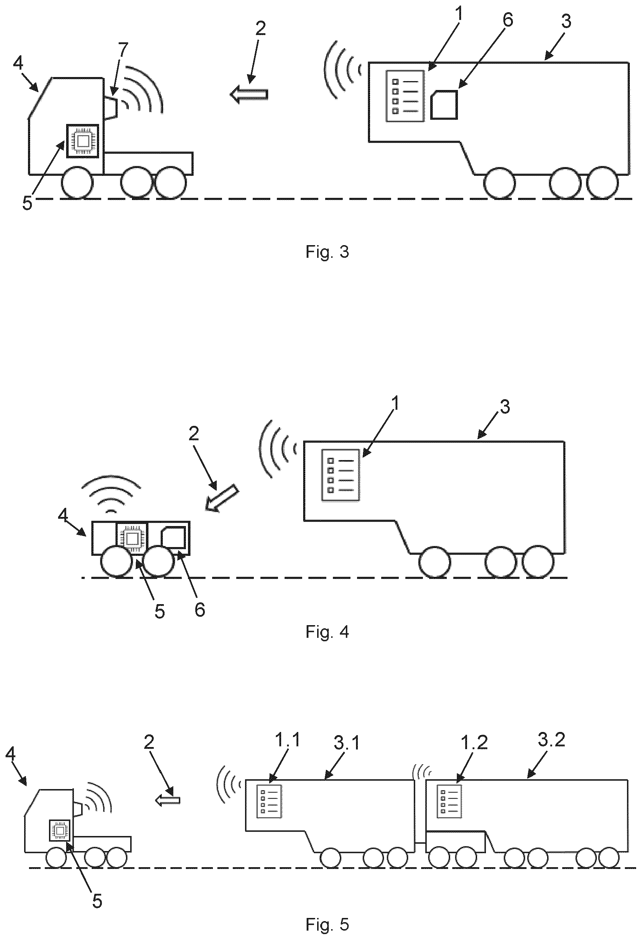

Fig. 1 shows the implement (3) being provided with the target (1), so that when read by the detection device (7) of the tractor vehicle (4), it transfers data (2) relating to the physical characteristics of the implement itself, for example, just the model or a previously registered identification of the implement (3), such as a number that identifies it. From this, the data (2) is received and interpreted by the processor (5) which, based on the model or identification of the implement (3), accesses the memory (6) and searches for the setup associated with the model or identification of the implement. Based on this, the processor (5) reads the setup stored in memory (6) and executes it in addition to or in replacement of the autonomous tractor vehicle (4) control algorithm. Likewise, Fig. 4 shows a tractor vehicle (4) being a dolly, operating with the same configurations described above.

Fig. 2 shows a similar arrangement to that shown in Fig. 1, but with the memory (6) being linked to a remote server or cloud. In this case, the processor (5) reads the model/implement identification data (3) and, through a connection, searches the remote server or cloud for the setup associated with the read data. After this, this setup is downloaded and, subsequently, the setup is executed by the processor (5).

Fig. 3 shows the implement (3), unlike the previous configurations, being provided with memory (6). In this context, the memory (6) is provided with a control setup relating exclusively to the implement (3) where the memory (6) is embedded. The setup is previously defined according to the characteristics/parameters of the implement (3) itself. Based on this, the implement (3) itself already provides the tractor vehicle (4) with the setup to be executed on the processor (5).

Furthermore, to execute certain autonomous operations, the implement (3) is also equipped with a VCU and embedded electronics. Thus, levels 4 and 5 are served by the implement (3), as well as levels 1, 2 and 3 for assistance in one of the operations such as automatic lifting of the support feet; height adjustment between king pin and fifth wheel; checking for obstacles such as vehicles/pedestrians in the rear region of the implement (3).

### Example 3 - CVC

The formation of a CVC is achieved by coupling one or more road implements (3) to the tractor vehicle (4), that is, the road implement (3) is a trailer, interlinked semi-trailer, interlinked semi-trailer, road train, etc. Fig. 5 shows a first implement (3.1) and a second implement (3.2) coupled together, forming an interlinked semi-trailer for the example. The implements (3.1 and 3.2) are not necessarily the same, and the implements (3.1 and 3.2) are equipped, respectively, with a first target (1.1) and a second target (1.2). Thus, the tractor vehicle (4) executes control configurations from static data (2) from the first implement (3.1) and the second implement (3.2), with the static data (2) coming from the respective targets (1.1 and 1.2). In other words, the tractor vehicle (4) control settings are functions of a combination of static data (2) from the first implement (3.1) and the second implement (3.2).

To this end, in one way, the static data (2) is transmitted to the tractor vehicle (4) separately from the first target (1.1) and from the second target (1.2).

Otherwise, the first implement (3.1) receives static data (2) from the second implement (1.2) from the second target (1.2). Therefore, static data (2) comprises a combination of data from both the first implement (3.1) and the second implement (3.2). Thus, since at least one of the CVC implements has the static data (2) of all CVC implements, control configurations are executed by the processor (5) as pre-setup or CVC movement authorization.

In other words, based on the identification of the CVC, the intelligence can be embedded in the tractor vehicle (4) or in the implement (3). If it is shipped on the tractor vehicle (4), the processor (5) receives the setup information to complement the own tractor vehicle (4) control algorithm. Otherwise, with the intelligence embedded in one of the implements (3), the implement identification data (2) also contains the control algorithm for the tractor vehicle (4), so that the processor (5) reads the data and downloads the program sent by one of the implements (3).

Alternatively, in the construction of a CVC such as interlink semi-trailer, interlink semi-trailer, road train or conceptually similar, the first implement (3.1) is equipped with intelligence, that is, with a control processor (5) embedded in it, in addition to traction/motorization components (e.g., electric motor, electric axle, battery, etc.). With this, the first implement (3.1) is capable of serving as the tractor vehicle for the second implement (3.2) and any others that are coupled. Thus, the first implement (3.1), also equipped with a target (1) with static data (2) relating to the first implement (3.1) itself, is capable of reading the identification data (2) of the second implement (3.2) to thus starting the route as previously defined in the tractor vehicle context. Furthermore, the first implement (3.1) can also operate as a road implement, described previously, coupling to an independent tractor vehicle (4), allowing for flexible operations.

### Example 4 - Identification method for autonomous vehicle

One of the applications of the exemplary method is for an autonomous cargo transport vehicle, providing identification of the implement (3) for the tractor vehicle (4).

As a tractor vehicle (4) approaches a road implement (3), an event is detected through a form of interaction between the tractor vehicle (4) and the implement (3). Thus, the event is established through a moment wherein the identification of the implement (3) for the tractor vehicle (4) can be started. To achieve this, the forms of interaction are based on remote routes using RFID technology, on authorization from an operator, on reading a code. Alternatively, the forms of interaction are through coupling or connection via CAN communication.

Therefore, the event is defined by:
i. a RFID tag on the implement (3), such that the event refers to the approach to reading the RFID, where the electromagnetic field emitted by a reader on the tractor vehicle (4) stimulates/excites the RFID tag to initiate communication/interaction provided by sending data from the implement (3) to the tractor vehicle;
ii. a coupling, a physical connection via CAN cabling or a wireless connection, wherein communication starts when the coupling/connection is stable for data transmission from the implement (3) to the tractor vehicle;
iii. a two-dimensional code reading (QR Code and ArUco), with communication/interaction starting when the code reading reaches a sufficient resolution;
iv. computer vision recognition using a camera on the tractor vehicle (e.g., on the 5th wheel), where this camera identifies a considerable distance to trigger communication;
v. a reading of a code or an RFID tag on the tractor vehicle (4), so that a reader positioned on the implement (3) stimulates/reads the tag/code on the tractor vehicle (4);
vi. a pairing between tractor vehicle (4) and implement (3), identifying that the tractor vehicle (4) is nearby using proximity technology, e.g., Bluetooth^{®}, to start communication when the tractor vehicle (4) and implement (3) are paired;
vii. Among other possibilities.

Upon event detection, the static data (2) linked to the target (1) is read, allowing the control configuration to be executed based on the static data (2) read. Furthermore, static data (2) has control configurations ready for execution, optimizing computational costs by reducing data processing.

Finally, as the control configuration is a pre-setup or even an authorization to drive the implement (3), autonomous control algorithms access the pre-setup to carry out autonomous control operations under one of the five automation levels.

### Example 5 - Dolly

In this example, an autonomous dolly (4) was developed capable of identifying at least one road implement (3) and transporting it from one point to another based on a plurality of data, such as road implement data - which includes data relating to implement characteristics (3) and vehicle dynamics data - geo-referencing data - which includes mapping data of a route to be traveled - and highway data - which includes data obtained through displacement sensors positioned on the autonomous dolly ( 10) and/or in the road implement (11).

The dolly (4) developed is capable of identifying the characteristics of the implement (3) by wirelessly reading a code with road implement data placed on the implement (3) or outside it. Said code with implement data comprises data characterizing the implement (3), such as, for example, the implement model; implement size, load capacity; type of cargo transported; implement dynamics, etc.

The dolly (4) has a processor (5) provided with a control algorithm capable of receiving data from the implement (3) and/or the autonomous dolly (4) - implement data, geo-referencing data and/or highway data -, process said data and make decisions regarding the operation of the route to be traveled and/or during real-time traffic of the CVC from one point to another or for moving the dolly (4).

In this way, from the reading and identification of the implement (3) and the capture of data in real time, including data on the dynamics of the CVC on the route traveled, the processor (5) is capable of generating a better route to be traveled and carrying out making operational decisions on the route to be traveled and during traffic in real time.

The processor (5), then, processes the data collected and transmitted by sensor devices arranged in the CVC (dolly + implement), such as camera, LiDAR, radar. This data is used as input into deep neural networks, trained to detect static or moving objects of interest, such as vertical and horizontal signs, traffic lights, pedestrians, vehicles, etc. Furthermore, the processor (5) estimates the location of these objects on the maps and detects their relevant states, such as, for example, green or red traffic lights, empty or occupied pedestrian crossings, etc.

Geo-referencing data is obtained from a mapping subsystem, which builds occupancy and reflectivity maps, wherein each cell represents the presence of obstacles or the characteristic of the surface of the environment around the CVC or dolly (4). This subsystem operates both in off-line mode, creating static maps that are stored for later use, and also in on-line mode, wherein maps are created instantly, considering dynamic information from the environment.

In off-line mode, the processor algorithm (5) simultaneously estimates the vehicle state (location and orientation) and the values of each map cell, based on the fusion of data collected by multiple sensor devices (LiDAR, radar, GPS, IMU, odometry) during manual operation of the CVC along the region to be mapped.

In on-line mode, the mapping subsystem receives as input the data collected instantly by the sensor devices and updates the cell values of the previously created maps.

Highway data is obtained through a localization subsystem, which estimates the state of the CVC or dolly (4) (location and orientation) in relation to maps. Starting from a known initial state, in each subsequent estimation, the subsystem receives as input the last known state of the CVC or dolly (4), the static maps of the region and the data collected instantly by sensor devices (LiDAR, radar, IMU, odometry). Then, the subsystem creates a dynamic local map and estimates the current state of the CVC or dolly (4), matching this dynamic local map with the previously created static maps, using a particle filter algorithm.

In this way, all data captured in real time and/or previously obtained is sent to the processor (5), so that a route planning subsystem of the processor (5) determines the route and the optimal trajectories to be followed by the dolly (10) or CVC, even if there are multiple routes and alternative trajectories to reach a desired destination.

In this sense, the route planning subsystem receives as input the current state of the vehicle (location and orientation), the desired state at the destination, maps of the region and the set of known routes and trajectories. A route is made up of several sections and intersections. Each section corresponds to a set of trajectories, which are composed of sequences of vehicle states, in a region of interest. The distance between two subsequent points on a trajectory is approximately 0.5 m, where said subsystem must use a search algorithm.

In this way, the processor (5), from a decision-making subsystem, makes decisions considering the current scenario of the CVC: the current state (location, orientation and speed), maps of the region, the current trajectory and all special traffic situations in the region, such as, for example, mandatory stop indication, speed limit indication, pedestrian crossing, traffic light, speed bump, barrier, etc.

Depending on each situation encountered in the current scenario, the decision-making subsystem chooses a point along the trajectory and establishes a state goal to be achieved at this point. Furthermore, this subsystem is responsible for the appropriate behavior of the CVC in accordance with traffic rules, for example, when becoming aware of the existence of a traffic light with the red light on at a certain point on the trajectory, the subsystem must adjust the speed target of the vehicle to zero a few meters before the location of the traffic light on the map.

Furthermore, the processor (5), through a control subsystem, calculates the commands that are sent to a system for actuating the vehicle's acceleration, braking and steering mechanisms, using a Proportional Integral Derivative (PID) approach. Furthermore, this subsystem must receive as input the planned trajectory for the CVC or dolly (4) and the data collected instantly by the sensor devices. Then, the control subsystem calculates an error measure that indicates how far the vehicle's current state is from that of the planned trajectory. Said error measure is used to calculate the commands that are sent to the actuation system in order to compensate and minimize this error.

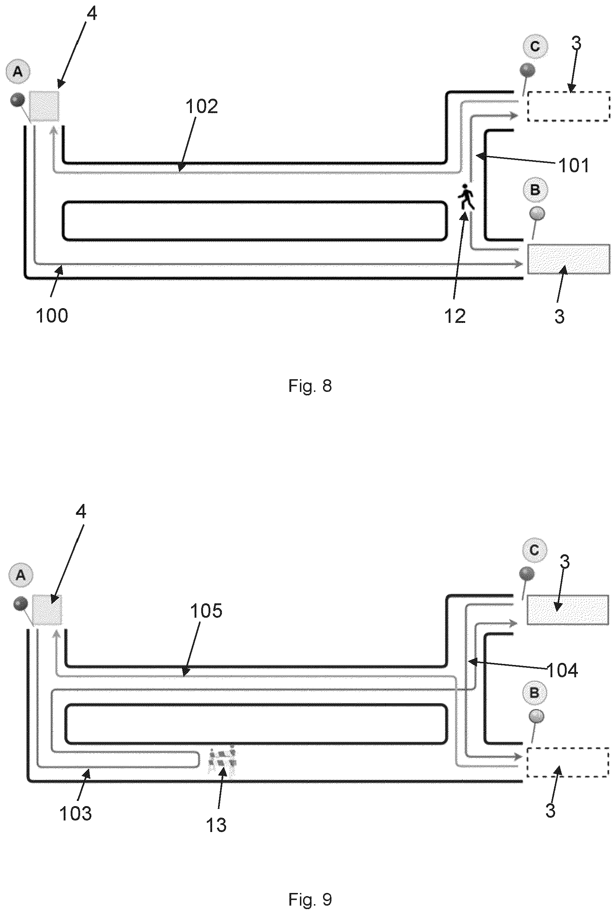

Fig. 8 shows an indoor operating scenario for the dolly (4) developed in this example. On a route (100), the dolly (4) departs from a point (A) to point (B) without any implement attached, following the path of the route (100). Upon arriving at point (B), the dolly (4) attaches to the implement (3), assuming a new configuration (dolly + implement) and from this point onwards, the vehicle continues in its new configuration along the route (101) to the destination to point (C). During the route (101), the dolly (4) is able to avoid the pedestrian (12). Upon arriving at point (C), the dolly (4) uncouples and parks the implement (3) and then the dolly (4) follows route (102) towards point (A).

Fig. 9 shows the same scenario as Fig. 8, with the dolly (4) taking different routes. In Fig. 9, the dolly (4) starts from a point (A) without load and moves along the route (103), when it comes across a static obstacle (13). The processor (5) identifies the obstacle (13) and generates a new route for the dolly (4) to move and, thus, the dolly (4) returns and follows an alternative path generated by the processor (5) to the point (C). At point (C), the dolly (4) is coupled to the implement (3) and follows along the route (104) to point (B). At point (B), the implement (3) is uncoupled, and the dolly (4) returns to point (A) via route (105). On routes (103) and (105), the dolly (4) continues without additional load. Only in segment (104) does the dolly (4) move with an attached load.

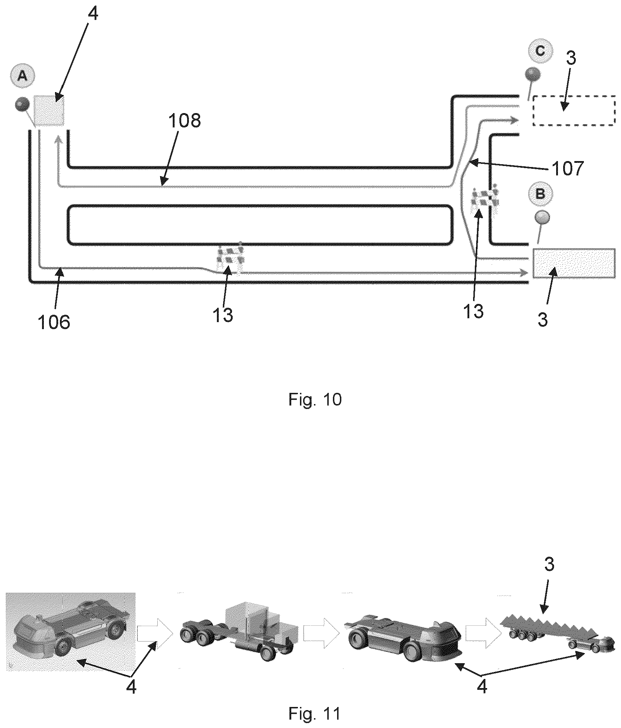

Fig. 10 shows the same scenarios as Figs. 8 and 9, with the dolly (4) taking different routes. The dolly (4) starts from point (A) and, through route (106), goes to the implement (3) located at point (B). On the trajectory (106) that connects points (A) and (B), there is a static obstacle (13) that partially interrupts the lane. The dolly (4), without load, avoids the static obstacle (13) and follows the trajectory to reach point (B).

Still in Fig. 10, at point (B), the dolly (4) attaches to the implement (3) and moves towards point (C) through route (107). Along the route (107), there is again a static obstacle (13) partially interrupting the lane. In this way, the vehicle composed of dolly (4) + implement (3) avoids the obstacle (13) and continues to point (C). At point (C), the dolly (4) uncouples and parks the implement (3) and follows the route (108) to point (A) without any additional load or obstacle in its trajectory. Once point (C) is reached, the dolly (4) releases the implement (3) and follows the return trajectory to point (A) following the route (108).

In these contexts, additionally, there is an application wherein the lane or route is provided with components that interact with the dolly's smart system, where the dolly's processor (5), through peripherals, interacts with these components and uses the data read for operations. These components can be active or passive. When interacting with the components on the lane, the dolly's processor (5) uses the read data for a more specific location, for example, within the tracks or demarcations on the lane. This data is used in a complementary way to that read by the dolly's other sensors (4).

These track components are described in a co-pending patent application from the same applicant, entitled "Passive Component for Interaction with a Vehicle and Method of Interaction between Vehicle and the Passive Component," which is incorporated into the present application by reference. As an example, these components are RFID tags placed on the tracks and lane markings. In this way, the dolly (4) is provided with an RFID tag reader compatible with the tags arranged on the lane and, as it approaches the tags, the dolly (4) receives the data and the processor (5) reads it. Based on this data, the processor (5) is capable of calculating the position within the track or demarcations. Still as exemplified in this applicant's co-pending application, said component is a lane light being provided with an RFID tag.

### Example 6 - Tests

The tractor vehicle (4) is a vehicle equipped with a fifth wheel for coupling to a road implement (3). Fig. 11 shows different layouts of tractor vehicles (4), whether or not they have a driver's cabin. The dolly layout is used for the tests described for the purpose of validating the present invention.

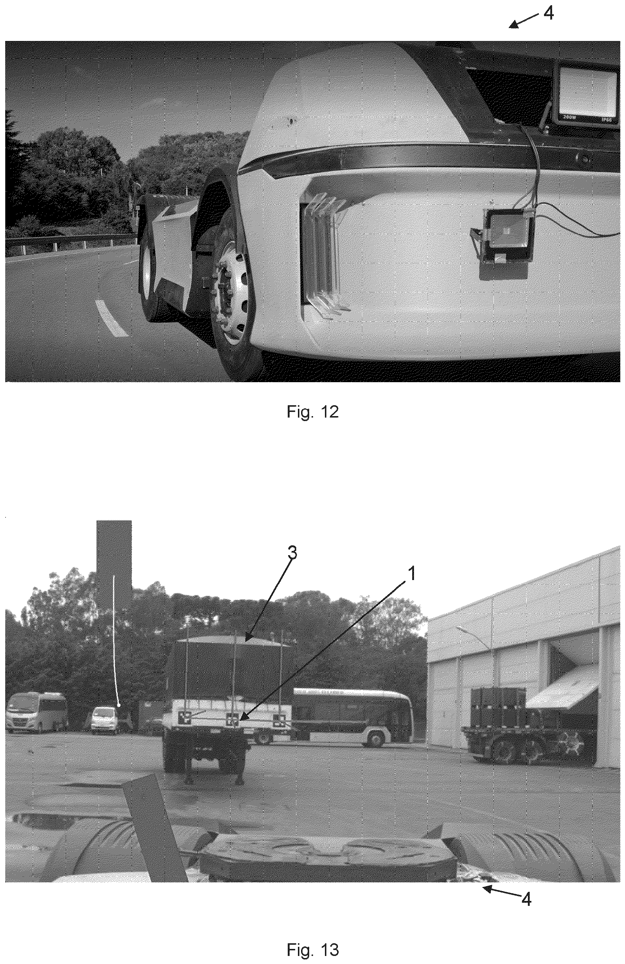

Fig. 12 shows a dolly (4) for tests carried out on the running lane.

Fig. 13 shows the smart system of the present invention that detects an event when reading the target (1), identifying the implement (3) for the dolly (4) through static data (2) linked to the target (1). With this, the system allows different autonomous operations regardless of the level of automation. Furthermore, Fig. 13 represents the operation corresponding to coupling the dolly (4) to the implement (3).

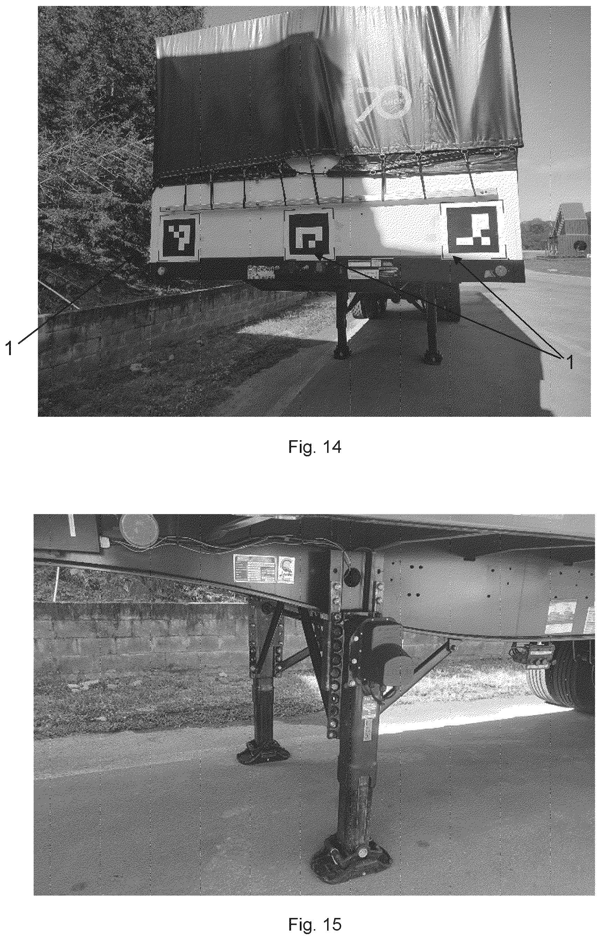

Thus, as the dolly (4) approaches the implement (3), the targets (1), arranged on the front of the implement (3), become clearer as shown in Fig. 14.

Fig. 15 shows a device that lifts the support feet of the implement (3), although the device is not necessarily automatic. Even so, a static data (2) of the implement refers to a position of the support foot between retracted and extended.

For this, the dolly (4) is provided with a control architecture, including a processor being a VCU as shown in Fig. 16a. Additionally, the architecture comprises a unit (ECU) for remote control, as well as additional devices such as safety receiver and support foot control (RTU). In addition, the architecture also contains video cards, LiDAR controller, IMU (Inertial Measurement Unit), GPS and steering ECU as shown in Fig. 16b.

The architecture is fed by data coming from sensors and detectors that read the data. For example, the data read are static data (2), highway data and dynamic data, contributing to security formed by data redundancy. Thus, the dolly (4) in the example is provided with cameras shown in Fig. 17 and LiDAR sensors shown in Fig. 18a.

From the reading of the sensors, as shown in Fig. 18b, the processor (5) creates a mapping of the surroundings of the dolly (4). To do this, the camera detects a field of view of the dolly (4) as shown in Fig. 19.

Fig. 20a illustrates autonomous driving control components for application on the dolly (4). For steering control, the dolly's smart system (4) also uses track data illustrated in Fig. 20b, where the track lanes are detected.

Otherwise, the dolly (4) shown in Fig. 21b is operated by a remote control shown in Fig. 21a. Thus, the present invention allows a fleet manager to carry out operations via remote control over the dolly (4), optimizing cargo transport. Furthermore, the coupling and lifting of the support feet are carried out via remote control.

Furthermore, to identify vehicles, such as a CVC or tractor vehicle, a recognition system calculates a probability of vehicle identification based on the camera reading with computer vision as shown in Fig. 22. Thus, the recognition system classifies vehicles into categories with their respective probability: truck, bus and car.

For the tests, dynamic and kinematic modeling was considered for an autonomous transport vehicle formed by the dolly (4) coupled to the implement (3) as shown in Fig. 23. Fig. 24 shows a load arranged on an implement (3).

As an example, static data (2) is a constant depending on dynamic data. Fig. 25a shows a graph of the minimum turning radius as a function of CVC speed. Thus, a control configuration corresponds to the speed setup related to the minimum turning radius. Additionally, the turning radius is related to another static data (2): center of gravity (CG) of the implement (3) and/or the combination. Therefore, from a combination of static data (2) of minimum turning radius and different CG, a different setup is obtained as shown in Fig. 25b, presenting a second speed setup as a function of the minimum turning radius.

Similarly, Fig. 25c shows a graph of the lateral acceleration of the dolly (4), being a buggy, as a function of speed for a test in a circle with a radius R equal to 30m, comparing the lateral accelerations of the buggy alone with the buggy (4) and a semi-trailer (SR) coupled.

Fig. 25d shows a graph of the roll angle of the buggy (4) as a function of the speed of the buggy (4) and the buggy (4) with the semi-trailer attached.

Thus, when the tractor vehicle (4) identifies that the implement (3) has a certain CG related to the implement model and the type of loading, in addition to other parameters of the implement (3), the control are performed by the tractor vehicle (4) algorithm which considers the parameters of limit lateral acceleration, speed limit in curves and minimum turning radius. Thus, these setups guide the control actions of the tractor vehicle (4), avoiding exceeding the limits of vehicle dynamics, such as speed and roll angle, previously defined. Thus, Figs. 25a to 25d exemplify how static data defines control configurations in autonomous vehicles, promoting safety and reliability for vehicle use regardless of the level of automation.

Furthermore, Fig. 26 shows a modeling of the suspension for the implement (3) and a graph of the force as a function of the suspension displacement. Therefore, control settings determine dynamic behavior.

Fig. 27a represents a parking maneuver performed in 20 steps for a case of difficult maneuver for a CVC formed by a truck (4) coupled to a semi-trailer (3). With this, modeling considers four states and two model inputs, obtaining the graphs in Fig. 27b.

The states are:
i. x - position x on the local map, considering the center of the rear axle of the semi-trailer as a reference;
ii. y (position y on the local map, considering the center of the trailer's rear axle as a reference);
iii. θ (heading/orientation angle of the semi-trailer, being zero in the east position with counterclockwise growth); and
iv. β (orientation of the truck in relation to the semi-trailer, being null when they are aligned).

Additionally, inputs are:
i. α (truck steering angle); and
ii. v (truck longitudinal speed).

Furthermore, Figs. 28 show a test mapping, using the LiDAR sensor based on the SLAM (Simultaneous Localization and Mapping) technique. With this, LiDAR draws an on-line map of an environment in order to obtain a route, considering obstacle avoidance. Furthermore, an off-line map of the environment is also used, so that the two maps are crossed in order to simplify data collection.

Furthermore, a test was carried out to detect the target (1) and identify the road implement (3). Fig. 29a illustrates the reading of static data (2) linked to a two-dimensional code composed of an ArUco (1). Thus, two static data (3) of the road implement (3) are identified: relative position being an angle of +4° between the implement (3) and the dolly (4), in addition to the implement model (3) being a semi-trailer (SR) sider.

Fig. 29b illustrates the reading of static data (2) in relation to another angle between the implement (3) and the dolly (4), being + 51.8 °. The "+" and "-" signs, which precede the angle value, correspond to a respective side on which the implement (3) is located in relation to the dolly (4).

Those skilled in the art will value the knowledge presented here and will be able to reproduce the invention in the presented embodiments and in other variants and alternatives, covered by the scope of the following claims.

## Claims

1. A smart system for autonomous cargo transport vehicle, the autonomous vehicle comprises a drived vehicle (3) and an autonomous tractor vehicle (4), wherein the smart system provides at least the identification of the drived vehicle (3) for the tractor vehicle (4), wherein the smart system comprises:
a. a target (1) comprising at least one static data (2) of the drived vehicle (3); and
b. a processor (5) that executes at least one control configuration of the tractor vehicle (4) based on the static data (2) from the target (1).

2. The smart system according to the claim 1, wherein:
a. the processor (5) is embedded in the tractor vehicle (4) and is provided with at least one autonomous control algorithm of the tractor vehicle (4), wherein the processor (5) executes the autonomous control algorithm taking into consideration the control configuration; and
b. the target (1) is related to the drived vehicle (3), being positioned on the drived vehicle (3) itself or at a vicinity point of the drive vehicle (3).

3. The smart system according to the claim 2, wherein the control configuration is a control pre-setup accessed by the autonomous control algorithm before a movement of one of the drived (3) or tractor (4) vehicles.

4. The smart system according to the claim 1, wherein the control configuration is relative to at least one static data (2), wherein a data memory (6) stores at least one control configuration.

5. The smart system according to the claim 4, wherein the data memory (6) is associated with the:
a. drived vehicle (3);
b. tractor vehicle (4);
c. target (1);
d. a remote location; and/or
e. a combination thereof.

6. Smart system according to the 1, wherein the static data (2) comprises:
a. a physical magnitude data;
b. a catalogue information data;
c. a control configuration; and/or
d. a combination thereof.

7. Configuration system for autonomous cargo transport vehicle, in which the autonomous vehicle comprises a drived vehicle (3) and an autonomous tractor vehicle (4) provided with an embedded processor (5), wherein the configuration system comprises:
a. a target (1) comprising at least one static data (2) of the drived vehicle (3); and
b. a data memory (6) communicating with the processor (5);
wherein the processor (5), based on the static data (2) from the target (1), performs at least one control configuration stored in the data memory (6).

8. Configuration system according to the claim 7, in that the configuration system comprises a detector for identifying the drived vehicle (3).

9. Road implement (3) comprising an identifying system of the road implement (3) for a tractor vehicle (4), wherein the road implement (3) comprises a target (1) related to at least one static data (2) of the road implement (3), wherein:
- the target (1) is capable of interacting with at least one vehicle tractor (4) reading device; and
- the static data (2) is related to at least one control configuration of the tractor vehicle (4).

10. Road implement (3) according to the claim 9, wherein static data (2) comprises:
a. a physical magnitude data;
b. a catalogue information data;
c. a control configuration; and/or
d. a combination thereof.

11. Road implement (3) according to the claim 9, wherein the static data (2) comprises an autonomous control algorithm for the tractor vehicle (4).

12. Autonomous dolly (4) comprising an identifying system for a road implement (3) and a processor (5) provided with at least one autonomous control algorithm of the tractor vehicle (4), wherein the processor (5) executes:
a. at least one control configuration of the autonomous dolly (4), based on at least one static data (2) of the road implement (3), the static data (2) from one target (1); and
b. the autonomous control algorithm taking into consideration the control configuration.

13. Identification method for an autonomous cargo transport vehicle, wherein the autonomous vehicle comprises a drived vehicle (3) and an autonomous tractor vehicle (4) with an embedded processor (5), wherein the method provides at least the identification of the drived vehicle (3) to the tractor vehicle (4), wherein the method comprises steps of:
a. detecting an event for initializing the identification of the drived vehicle (3) to the tractor vehicle (4);
b. identifying the drived vehicle (3) from reading at least one static data (2) of the drived vehicle (3); and
c. performing at least one control configuration of the tractor vehicle (4) by means of the processor (5), based on the static data (2) of the drived vehicle (3).

14. Method according to claim 13, wherein the static data (2) is previously defined, being related to the drived vehicle (3).

15. Method according to claim 13, wherein the method comprises a step of execution of an autonomous control algorithm of the tractor vehicle (4), which considers the execution of the control configuration.

16. Method, according to claim 15, wherein the control configuration execution step comprises executing a pre-setup configuration for the autonomous control algorithm execution step before an initial movement of one of the drived (3) or tractor (4) vehicles.

17. Method, according to claim 13, wherein the event is detected by the drived vehicle (3) or by tractor vehicle (4), wherein the event defines a moment for the start of identification of the drived vehicle (3) to the tractor vehicle (4).
